# EUROPEAN PATENT SPECIFICATION

(11) **EP 4 572 298 B1**
(45) Date of publication and mention of the grant of the patent: **08.07.2026**
(21) Application number: 23865768.8
(22) Date of filing: 30.08.2023
(51) Int. Cl.: G06F 1/16, H04M 1/02, G06F 3/0482, G06F 3/04842, G06F 3/0486, G06F 3/04845, G06F 3/04886, G06F 3/04847, G06F 3/04883

(54) **ELECTRONIC DEVICE AND METHOD FOR REPLICATING AT LEAST PORTION OF SCREEN DISPLAYED WITHIN FLEXIBLE DISPLAY ON BASIS OF SHAPE OF FLEXIBLE DISPLAY**
ELEKTRONISCHE VORRICHTUNG UND VERFAHREN ZUR REPLIKATION MINDESTENS EINES TEILS EINES IN EINER FLEXIBLEN ANZEIGE AUF BASIS DER FORM EINER FLEXIBLEN ANZEIGE ANGEZEIGTEN BILDSCHIRMS
DISPOSITIF ÉLECTRONIQUE ET PROCÉDÉ DE RÉPLICATION D'AU MOINS UNE PARTIE D'ÉCRAN AFFICHÉE À L'INTÉRIEUR D'UN DISPOSITIF D'AFFICHAGE SOUPLE SUR LA BASE DE LA FORME D'UN DISPOSITIF D'AFFICHAGE SOUPLE

(30) Priority: 16.09.2022 KR 20220117314; 27.09.2022 KR 20220122854
(43) Date of publication of application: 18.06.2025
(73) Proprietor: Samsung Electronics Co., Ltd., Suwon-si, Gyeonggi-do 16677 (KR)
(72) Inventor: LEE, Bona, Suwon-si, Gyeonggi-do 16677 (KR); NAM, Myoungwoo, Suwon-si, Gyeonggi-do 16677 (KR); MOON, Minjeong, Suwon-si, Gyeonggi-do 16677 (KR); PARK, Chanpyo, Suwon-si, Gyeonggi-do 16677 (KR); LEE, Seungyong, Suwon-si, Gyeonggi-do 16677 (KR)
(74) Representative: Appleyard Lees IP LLP
(86) International application number: PCT/KR2023/012928
(87) International publication number: WO 2024/058470

(56) References cited:
- CN-A- 111 263 005
- KR-A- 20200 119 020
- KR-A- 20200 140 609
- KR-A- 20220 101 327
- US-A1- 2022 060 572

## Description

### [Technical Field]

The present disclosure relates to an electronic device and a method for replicating at least a portion of a screen displayed within a flexible display on basis of a shape of the flexible display.

### [Background Art]

An electronic device having a deformable form factor is being developed by using a flexible display. For example, the electronic device including a plurality of foldable housings may provide user experience based on a shape of the electronic device to a user by using the flexible display positioned across the plurality of housings. For example, based on the shape of the flexible display that is folded or unfolded by external force of the user, the electronic device may change content displayed on the flexible display. As another example, an electronic device that rolls up or unfolds the flexible display is being developed.

US Patent Publication no. US 2022/0060572 A1 discloses a foldable mobile phone including a left (upper) device and a right (lower) device which are foldable with respect to each other, each device having a camera and a display in both a rear and a front side of the devices. In a folded state, the left device has a display one which has been folded into the right device, so the display one is placed in an uppermost location with respect to the user's view. In an open state, an opening angle between the left device and the right device is about 180 degrees. A display two is installed through the left device and right device. The display two is made of foldable material and can be folded when the mobile phone is in the folded state. When the mobile phone is in the folded state, the left and the right screens of display two face each other. The left device and the right device can be folded about 90 degrees. In this case, the screen viewed by a user displays a dual screen icon and a single screen icon. When the user selects the dual screen icon, another party located on an opposite side of the user looks at a screen having the same contents as the left screen of the display two through the display one. When the user selects a single screen icon, display one is turned off, or can display a separate screen to the screen of display two.

### [Disclosure]

### [Technical Solution]

The invention is defined in the appended claims.

### [Description of the Drawings]

FIG. 1 is a block diagram of an electronic device according to an embodiment.
FIG. 2A to FIG. 2B illustrate an example of distinct states of a housing and/or a flexible display of an electronic device according to an embodiment.
FIG. 3 illustrates an example of an operation in which an electronic device displays at least a portion of a screen displayed within a flexible display within a cover display, according to an embodiment.
FIG. 4 illustrates an example of a screen displayed by an electronic device based on an input indicating to select at least a portion of a screen displayed in a flexible display, according to an embodiment.
FIG. 5 illustrates an example of a screen displayed by an electronic device based on an input indicating to select at least a portion of a screen displayed within a flexible display, according to an embodiment.
FIG. 6 illustrates an example of a screen displayed by an electronic device based on an input indicating to select at least a portion of a screen displayed within a flexible display, according to an embodiment.
FIG. 7 illustrates an example of an operation in which an electronic device obtains information associated with a user browsing a cover display according to an embodiment.
FIG. 8 illustrates an example of an operation in which an electronic device changes a screen displayed through a cover display based on a touch input performed on a flexible display according to an embodiment.
FIG. 9A, FIG. 9B, and FIG. 9C illustrate an example of an operation performed by an electronic device based on an input indicating to select at least one of screens being displayed through a flexible display and corresponding to each of a plurality of applications, according to an embodiment.
FIG. 10 illustrates an example of an operation in which an electronic device displays at least a portion of a screen displayed on a first portion of a flexible display on a second portion of the flexible display distinct from the first portion.
FIG. 11 illustrates an exemplary flowchart for describing an operation of an electronic device according to an embodiment.
FIG. 12 illustrates an exemplary flowchart for describing an operation of an electronic device according to an embodiment.
FIG. 13 illustrates an exemplary flowchart for describing an operation of an electronic device according to an embodiment.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

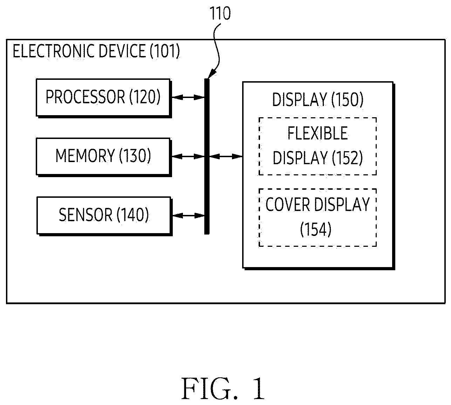

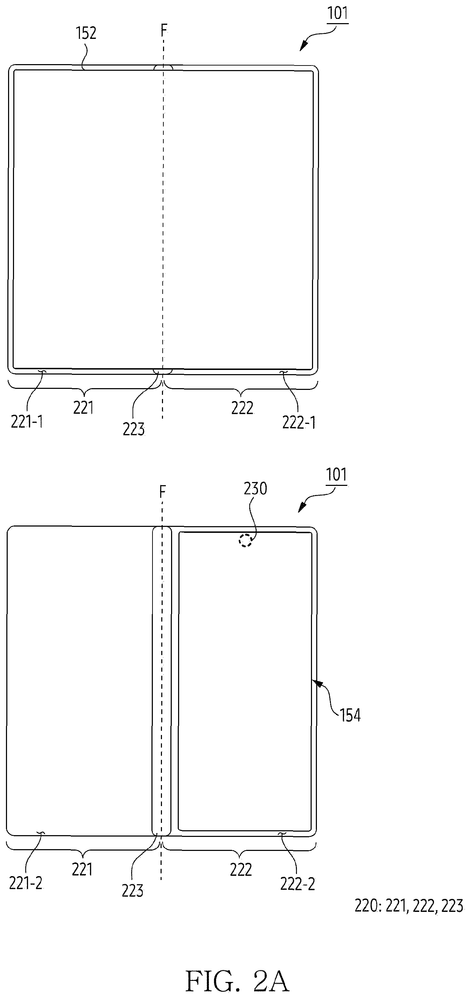

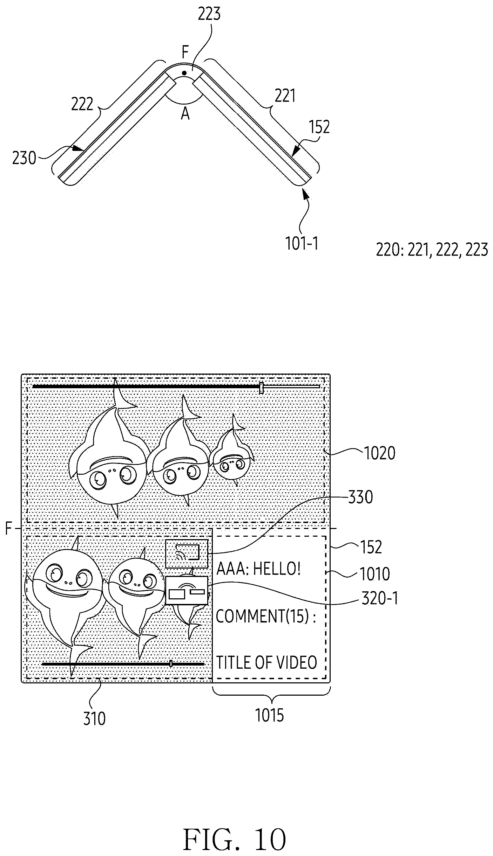

FIG. 1 is a block diagram of an electronic device 101 according to an embodiment. The electronic device 101 may include at least one of a processor 120, a memory 130, a sensor 140, or a display 150. The processor 120, the memory 130, the sensor 140, and the display 150 may be electronically and/or operably coupled with each other by an electronical component such as a communication bus 110. Hereinafter, distinct hardware (or circuits) distinguished by blocks being operably coupled may mean that a direct connection or an indirect connection between the hardware is established by wire or wirelessly so that second hardware is controlled by first hardware among hardware. Although illustrated based on distinct blocks, an embodiment is not limited thereto, and a plurality of hardware (e.g., combinations of the processor 120, the memory 130, and the sensor 140) may be included in a single integrated circuit such as a system on a chip (SoC). A type and/or the number of a hardware component included in the electronic device 101 is not limited as illustrated in FIG. 1. An exemplary shape of the electronic device 101 including one or more hardware described with reference to FIG. 1 will be described with reference to FIG. 2A to FIG. 2B, and/or FIG. 10.

According to an embodiment, the processor 120 of the electronic device 101 may include hardware and/or a circuit for processing data based on one or more instructions. The hardware and/or the circuit for processing data may include, for example, an arithmetic and logic unit (ALU), a floating point unit (FPU), a field programmable gate array (FPGA), a central processing unit (CPU), and/or an application processor (AP). The number of the processor 120 may be one or more. For example, the processor 120 may have a structure of a multi-core processor such as a dual core, a quad core, or a hexa core.

According to an embodiment, the memory 130 of the electronic device 101 may include a hardware component for storing data and/or an instruction inputted and/or outputted to the processor 120. The memory 130 may include, for example, a volatile memory such as a random-access memory (RAM), and/or a non-volatile memory such as a read-only memory (ROM). The volatile memory may include, for example, at least one of a dynamic RAM (DRAM), a static RAM (SRAM), a cache RAM, and a pseudo SRAM (PSRAM). The non-volatile memory may include at least one of, for example, a programmable ROM (PROM), an erasable PROM (EPROM), an electrically erasable PROM (EEPROM), a flash memory, a hard disk, a compact disk, a solid state drive (SSD), and an embedded multi media card (eMMC).

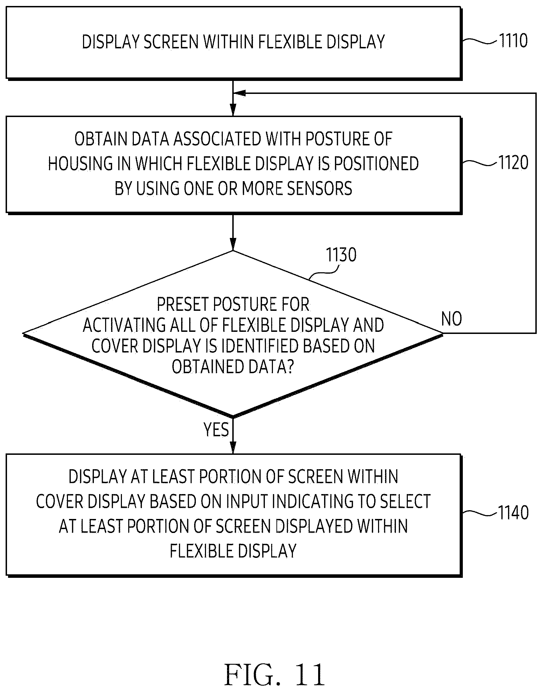

In the memory 130, one or more instructions (or commands) indicating calculation and/or an operation to be performed by the processor 120 on data may be stored. A set of one or more instructions may be referred to as firmware, an operating system, a process, a routine, a subroutine, and/or an application. For example, the electronic device 101 and/or the processor 120 may perform at least one of operations of FIG. 11 to FIG. 13 when a set of a plurality of instructions distributed in a form of the operating system, the firmware, a driver, and/or the application is executed. Hereinafter, the application being installed in the electronic device 101 may mean that one or more instructions provided in a form of the application are stored in the memory 130 of the electronic device 101, and the one or more applications are stored in an executable format (e.g., a file with an extension preset by the operating system of the electronic device 101) by the processor 120 of the electronic device 101.

The sensor 140 of the electronic device 101 may generate electronic information that may be processed by the processor 120 or stored in the memory 130 from non-electronic information associated with the electronic device 101. In an embodiment in which the electronic device 101 includes a deformable housing and/or the display 150 (e.g., a flexible display 152), the sensor 140 of the electronic device 101 may include a sensor for measuring a posture and/or a shape of the housing and/or the display 150. The sensor 140 of the electronic device 101 may include a magnet and a Hall sensor including a pair of a magnetic field sensor that measure a change in a magnetic field formed by the magnet. The magnet and the magnetic field sensor may be positioned in distinct portions of the housing of the electronic device 101. Based on the change in the magnetic field measured by the magnetic field sensor, the Hall sensor may identify a distance between the portions. In an embodiment in which the electronic device 101 includes the deformable housing, the electronic device 101 may identify the shape of the housing by using the Hall sensor including the magnet and the magnetic field sensor positioned in distinct portions of the housing. For example, the Hall sensor may output sensor data indicating the distance and/or the shape of the housing. An example of an operation in which the electronic device 101 identifies a shape of the display 150 including the flexible display 152 and/or a shape of the housing, by using the sensor 140 will be described with reference to FIG. 2A to FIG. 2B.

The sensor 140 included in the electronic device 101 is not limited to the Hall sensor described above. For example, the sensor 140 of the electronic device 101 may include an acceleration sensor, a geomagnetic sensor, a gyro sensor, or a combination thereof. The acceleration sensor, the geomagnetic sensor, the gyro sensor, or the combination thereof may be referred to as an inertia measurement unit (IMU). The acceleration sensor and the geomagnetic sensor may be included in the electronic device 101 to measure a physical movement (e.g., a translation motion) of the electronic device 101. For example, the acceleration sensor may output sensor data indicating a direction and/or magnitude of an acceleration (e.g., an acceleration of gravity) applied to the electronic device 101 using a plurality of preset axes (e.g., an x-axis, a y-axis, and a z-axis) perpendicular to each other. For example, the geomagnetic sensor may output sensor data indicating a direction (e.g., a direction of a N pole) of the magnetic field applied to the electronic device 101 by using two-dimensional to three-dimensional axes. The gyro sensor may be included in the electronic device 101 to measure rotation of the electronic device 101. For example, the gyro sensor may output sensor data indicating a parameter (e.g., angular velocity) indicating the rotation of the electronic device 101 based on the axes.

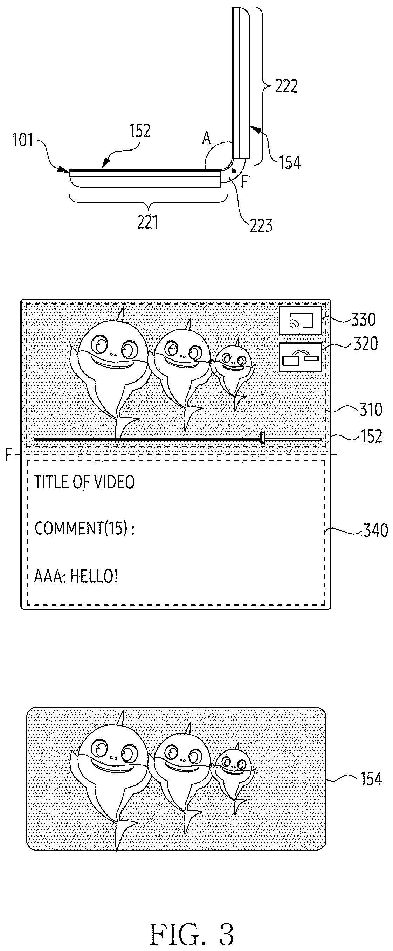

According to an embodiment, the display 150 of the electronic device 101 may output visualized information (e.g., at least one of screens of FIG. 3 to FIG. 10) to a user. For example, the display 150 may output visualized information to the user by being controlled by the processor 120. The display 150 may include a flat panel display (FPD) and/or an electronic paper. The FPD may include a liquid crystal display (LCD), a plasma display panel (PDP), and/or one or more light emitting diodes (LEDs). The LED may include an organic LED (OLED).

According to an embodiment, the display 150 of the electronic device 101 may include a sensor (e.g., a touch sensor panel (TSP)) for detecting an external object (e.g., a finger of the user) on the display 150. For example, based on the TSP, the electronic device 101 may detect an external object contacting the display 150 or floating on the display 150. In response to detecting the external object, the electronic device 101 may execute a function associated with a specific visual object corresponding to a position of the external object on the display 150 among visual objects being displayed in the display 150.

The number of the display 150 included in the electronic device 101 may be one or more. Referring to FIG. 1, the electronic device 101 according to an embodiment may include the flexible display 152 and a cover display 154. In an embodiment in which the electronic device 101 includes a foldable housing based on a folding axis, the flexible display 152 may be positioned on a first surface of the housing, and the cover display 154 may be positioned on a second surface opposite to the first surface. The flexible display 152 may be positioned across the folding axis on the first surface. For example, in case that the housing is folded by the folding axis, the flexible display 152 may be folded by the folded housing.

According to an embodiment, the processor 120 of the electronic device 101 may identify a posture and/or a shape of the housing and/or the flexible display 152 based on data identified through the sensor 140. In a state in which the screen is displayed within the flexible display 152, the processor 120 of the electronic device 101 may identify data of the sensor 140. The processor 120 of the electronic device 101 may identify a preset posture of the flexible display 152 and/or the housing for activating all of the cover display 154 and the flexible display 152 based on the identified data. Based on identifying the preset posture, the processor 120 of the electronic device 101 may display a visual object to select at least a portion of the screen to be displayed through the cover display 154 in the screen displayed through the flexible display 152. In response to an input identified based on the visual object and indicating to select at least a portion of the screen, the processor 120 of the electronic device 101 may display the at least a portion of the screen selected by the input within the cover display 154. An operation of the electronic device 101 based on the visual object and/or the input will be described with reference to FIG. 3 to FIG. 10.

Although not illustrated, the electronic device 101 according to an embodiment may include an output means for outputting information in another form other than a visualized form. For example, the electronic device 101 may include a speaker for outputting an acoustic signal. For example, the electronic device 101 may include a motor for providing haptic feedback based on a vibration.

As described above, the electronic device 101 according to an embodiment may duplicate at least a portion of a screen displayed within a first display (e.g., the flexible display 152) to a second display (e.g., the cover display 154) distinct from the first display. The operation of duplicating the at least a portion of the screen displayed within the first display to the second display may be referred to as mirroring. In an embodiment in which the first display and the second display are positioned toward distinct directions in the electronic device 101, based on the mirroring, the electronic device 101 may output a content in the distinct directions. For example, a first user who browses the flexible display 152 may display the screen displayed on the flexible display 152 to a second user who browses the cover display 154 by controlling the electronic device 101. In the example in which a size of the cover display 154 is smaller than a size of the flexible display 152, while providing first content in a first portion of the screen within the flexible display 152 to the second user through the cover display 154, the first user may browse second content dedicated to the first user using a second portion distinct from the first portion.

Hereinafter, an example of a form factor of the electronic device 101 including the flexible display 152 and the cover display 154 of FIG. 1 will be described with reference to FIG. 2A to FIG. 2B.

FIG. 2A to FIG. 2B illustrate an example of distinct states 201, 202 and 203 of a housing 220 and/or a flexible display 152 of an electronic device 101 according to an embodiment. The electronic device 101 of FIG. 2A to FIG. 2B may be an example of the electronic device 101 of FIG. 1. For example, the electronic device 101, the flexible display 152, and the cover display 154 of FIG. 1 may include the electronic device 101, the flexible display 152, and a cover display 154 of FIG. 2A to FIG. 2B. Referring to FIG. 2A to FIG. 2B, the electronic device 101 may be a terminal. The terminal may include, for example, a personal computer (PC) such as a laptop and a desktop, a smartphone, a smartpad, and/or a tablet PC. An embodiment is not limited to the example, and the terminal may include a smart accessory such as a smartwatch and/or a head-mounted device (HMD).

Referring to FIG. 2A, according to an embodiment, the deformable housing 220 of the electronic device 101 may have a structure foldable by a folding axis F. The housing 220 may include a first sub-housing 221 and a second sub-housing 222. The housing 220 may include a hinge assembly 223 foldably coupled to the first sub-housing 221 and the second sub-housing 222 through each of distinct surfaces. The folding axis F in the housing 220 may be included in the hinge assembly 223.

Referring to FIG. 2A, at least a portion of the flexible display 152 of the electronic device 101 may be positioned on a first surface 221-1 of the first sub-housing 221. In an embodiment of FIG. 2A in which a single plane is formed by the first surface 221-1 of the first sub-housing 221 and a first surface 222-1 of the second sub-housing 222, the flexible display 152 may be positioned, across the hinge assembly 223, in both the first surface 221-1 of the first sub-housing 221 and the first surface 222-1 of the second sub-housing 222. A surface of the housing 220 formed by the first surface 221-1 of the first sub-housing 221 and the first surface 222-1 of the second sub-housing 222 may be referred to as a front surface.

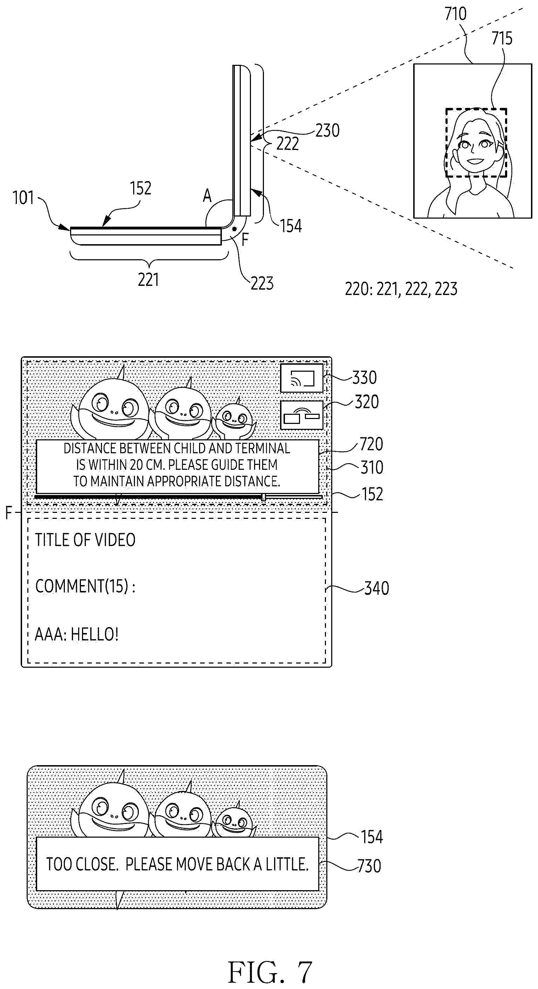

Referring to FIG. 2A, the cover display 154 of the electronic device 101 may be positioned on a second surface 222-2 opposite to the first surface 222-1 of the second sub-housing 222 in which the flexible display 152 is positioned. For example, a single plane referred to as a rear surface may be formed by a second surface 221-2 of the first sub-housing 221 opposite to the first surface 221-1, and the second surface 222-2 of the second sub-housing 222. As the cover display 154 is positioned on the second surface 222-2 of the second sub-housing 222, the cover display 154 may be positioned in a direction opposite to the flexible display 152. The electronic device 101 including the cover display 154 positioned on the second surface 222-2 of the second sub-housing 222 may include a camera 230 positioned on the second surface 222-2. An example of an operation performed by the electronic device 101 based on the camera 230 will be described with reference to FIG. 7.

According to an embodiment, the electronic device 101 may include the housing 220 foldable by the folding axis F, and/or a sensor (e.g., the sensor 140 of FIG. 1) for identifying a shape of the flexible display 152. For example, as a Hall sensor is included in the hinge assembly 223, the electronic device 101 may identify an angle of the flexible display 152 bent by the folding axis F by using the Hall sensor. In the example, the Hall sensor may output sensor data used to identify the angle associated with the folding axis F. For example, as IMU sensors are included in each of the first sub-housing 221 and the second sub-housing 222, the electronic device 101 may identify a first direction of a first portion of the flexible display 152 positioned on the first sub-housing 221 and a second direction of a second portion of the flexible display 152 positioned on the second sub-housing 222 by using the IMU sensors. In the example, each of the IMU sensors may output sensor data indicating a direction of an acceleration of gravity applied to a sub-housing in which an IMU sensor is positioned based on preset axes (e.g., an x-axis, a y-axis, and/or a z-axis).

For example, the electronic device 101 may identify the first direction of the first portion of the flexible display 152 positioned on the first sub-housing 221 and the angle of the flexible display 152 bent by the folding axis F, based on an IMU sensor included in the first sub-housing 221 and the Hall sensor included in the hinge assembly 223. In the example in which the electronic device 101 identifies the first direction and the angle using the sensor, the electronic device 101 may obtain the second direction of the second portion of the flexible display 152 positioned on the second sub-housing 222 based on the first direction and the angle.

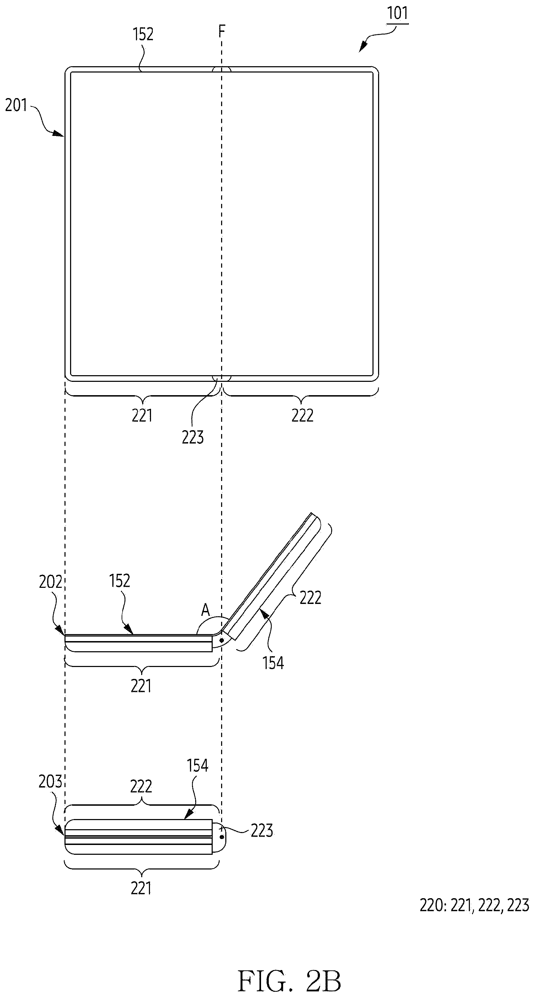

A state of the electronic device 101 may be distinguished by a shape of the housing 220 and/or the flexible display 152 identified based on the sensor. Referring to FIG. 2B, the distinct states 201, 202 and 203 of the electronic device 101 distinguished by an angle A, of the housing 220 and/or the flexible display 152 bent by the folding axis F, are illustrated. As described above with reference to FIG. 2A, the electronic device 101 may identify the angle A of the housing 220 and/or the flexible display 152 bent by the folding axis F by using data identified by the sensor. According to an embodiment, the electronic device 101 may identify, among preset states, a preset state corresponding to the state of the electronic device 101 based on a result of comparing the angle A and preset angle ranges. The preset states may be referred to, in terms of the shape and/or a posture of the housing 220 and/or flexible display 152, as preset shapes and/or preset postures, or may be referred to as preset modes.

In an embodiment, the preset angle ranges compared to the angle A of the housing 220 and/or the flexible display 152 bent by the folding axis F may include a first preset angle range (e.g., a range including an angle greater than or equal to 131 ° and less than or equal to 180 °) including a straight angle (e.g., 180 °). The preset angle ranges may include a second preset angle range (e.g., a range including an angle between 70 ° to 130 °) distinct from the first preset angle range and includes a right angle (e.g., 90 °). The preset angle ranges may include a third preset angle range (e.g., a range including an angle between 0 ° to 70 °) distinct from the first preset angle range to the second preset angle range and including 0 °.

A state of the electronic device 101 may be distinguished by a preset angle range including the angle A and/or a state of a display (e.g., the display 150, the flexible display 152, and/or the cover display 154 of FIG. 2) in the electronic device 101. For example, a state (e.g., the state 201 of FIG. 2B) in which the electronic device 101 identifies the angle A included in the first preset angle range may be referred to as an unfolded state (or an unfolding state), an opened state, and/or a straight angle state. For example, a state (e.g., the state 202 of FIG. 2B) in which the electronic device 101 identifies the angle A included in the second preset angle range may be referred to as a sub-folded state (or a sub-folding state), a sub-closed state, a sub-unfolded state, a sub-opened state, and/or a flex state (or a flex mode). For example, a state (e.g., the state 203 of FIG. 2B) in which the electronic device 101 identifies the angle A included in the third preset angle range may be referred to as a folded state (or a folding state) and/or a closed state. Referring to FIG. 2B, in the state 203 referred to as the folded state, the flexible display 152 may be fully occluded by the housing 220 of the electronic device 101. In terms of being occluded in the folded state, the flexible display 152 may be referred to as an inner display, and the cover display 154 may be referred to as an outer display. A state in which the electronic device 101 identifies the angle A exceeding 0 ° in the third preset angle range, and a state of the cover display 154 is an active state (e.g., a state in which a screen corresponding to an application executed by the electronic device 101 is displayed through the cover display 154) may be referred to as a tent state.

Referring to FIG. 2B, in the state 202 referred to as the flex state, the second surface 221-2 of the first sub-housing 221 distinct from the second sub-housing 222 in which the cover display 154 is positioned may be positioned toward the ground. For example, a direction of the second surface 221-2 of the first sub-housing 221 may be parallel to a direction of the acceleration of gravity applied to the electronic device 101, or a difference between the direction of the second surface 221-2 and the direction of the acceleration of gravity may be less than a preset difference. In the state 202, as in the example, in case that the direction of the second surface 221-2 of the first sub-housing 221 distinct from the second sub-housing 222 in which the cover display 154 is positioned corresponds to the direction of the acceleration of gravity, directions of the flexible display 152 and the cover display 154 of the electronic device 101 may correspond to another direction perpendicular to the direction of the acceleration of gravity. Since all of the directions of the flexible display 152 and the cover display 154 correspond to the other direction, a possibility that all of the flexible display 152 and the cover display 154 are exposed to distinct users may increase. A posture of the electronic device 101, in which all directions of the flexible display 152 and the cover display 154 correspond to the other direction, including the posture of the electronic device 101 described based on the example may be referred to as a preset posture.

According to an embodiment, the electronic device 101 may display one or more visual objects for duplicating at least a portion of a screen displayed through a first display (e.g., the flexible display 152) among displays of the electronic device 101 to a second display (e.g., the cover display 154) distinct from the first display, based on identifying the angle A included in a preset angle range (e.g., the second preset angle range including an angle between 70 ° to 130°) associated with the preset posture. For example, the electronic device 101 may display the one or more visual objects based on identifying that a direction of the cover display 154 corresponds to another direction (e.g., a direction substantially perpendicular to the direction of the acceleration of gravity) distinct from the direction of the acceleration of gravity by the housing 220 bent by the folding axis F, by using the data identified by the sensor. The one or more visual objects may include executable objects associated with mirroring of the flexible display 152 and the cover display 154. An operation of the electronic device 101 based on the one or more visual objects will be described with reference to FIG. 3 to FIG. 10.

As described above, according to an embodiment, the electronic device 101 may identify a preset posture, where the possibility that all of the flexible display 152 and the cover display 154 are exposed to the distinct users increase, such as a posture of the electronic device 101 in the state 202. In case that a posture of the electronic device 101 identified by the sensor corresponds to the preset posture, the electronic device 101 may display at least one visual object for mirroring of the flexible display 152 and the cover display 154. In response to an input associated with the at least one visual object, the electronic device 101 may display at least a portion of the screen displayed through the flexible display 152 within the cover display 154. Since the possibility that all of the flexible display 152 and the cover display 154 are exposed to the distinct users increase in the preset posture, the electronic device 101 may provide a matched content (e.g., at least a portion of the screen displayed through the flexible display 152) to the distinct users.

Hereinafter, according to an embodiment, an example of an operation in which the electronic device 101 displays at least a portion of the screen displayed within the flexible display 152 through the cover display 154 will be described with reference to FIG. 3.

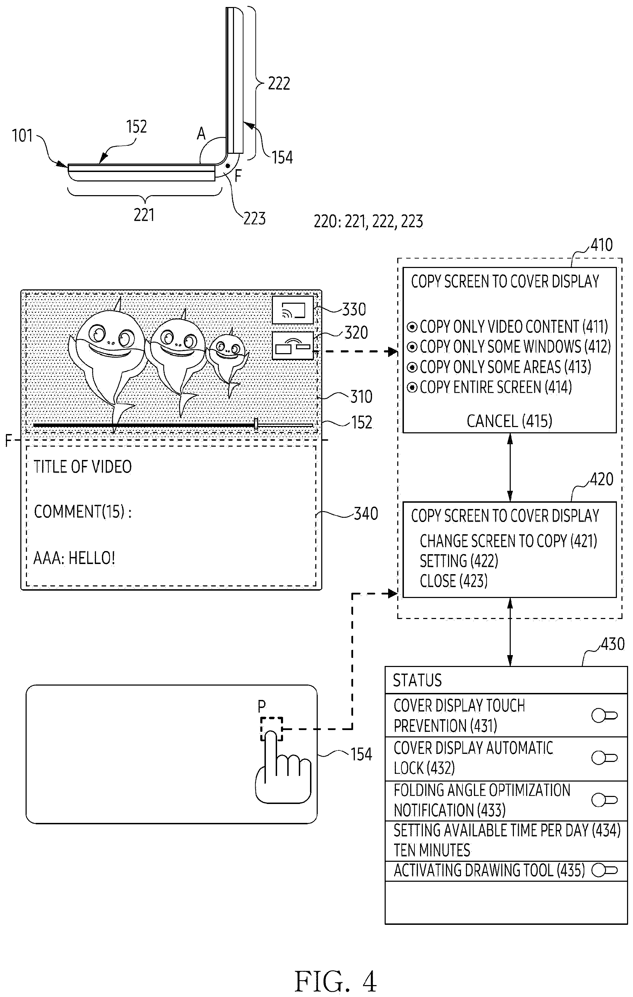

FIG. 3 illustrates an example of an operation in which an electronic device 101 displays at least a portion of a screen displayed within a flexible display 152 within a cover display 154, according to an embodiment. The electronic device 101 of FIG. 3 may be an example of the electronic device 101 of FIG. 1. For example, the electronic device 101, the flexible display 152, and the cover display 154 of FIG. 1 may include the electronic device 101, the flexible display 152, and the cover display 154 of FIG. 3. The electronic device 101 of FIG. 3 may have the form factor of the electronic device 101 described above with reference to FIG. 2A to FIG. 2B. For example, similar to the housing 220 of FIG. 2A to FIG. 2B, a housing 220 of the electronic device 101 of FIG. 4 may include a first sub-housing 221, a second sub-housing 222, and a hinge assembly 223. Referring to FIG. 3, screens displayed by the electronic device 101 through the flexible display 152 and/or the cover display 154 are illustrated. Hereinafter, a screen may refer to a user interface (UI) displayed in at least a portion of a display (e.g., the display 150 of FIG. 1 including the flexible display 152 and/or the cover display 154). The screen may include, for example, an activity of an Android operating system.

Referring to FIG. 3, an example of an operation in which the electronic device 101 simultaneously activates the flexible display 152 and the cover display 154 in a state (e.g., the state 202 of FIG. 2B) referred to as a flex state is illustrated. For example, in order to diversify functions supportable by the electronic device 101 based on a structure of the electronic device 101 including all of the flexible display 152 and the cover display 154, the electronic device 101 may simultaneously activate the flexible display 152 and the cover display 154. For example, in response to an input to simultaneously activate the flexible display 152 and the cover display 154, the electronic device 101 may simultaneously activate the flexible display 152 and the cover display 154. Based on all of the flexible display 152 and the cover display 154 being activated, the electronic device 101 may execute mirroring of the flexible display 152 and the cover display 154. Based on the mirroring, the electronic device 101 may display a multimedia content (e.g., a video, and/or an image) provided through the flexible display 152 to the cover display 154. For example, the multimedia content may be output through all of the flexible display 152 and the cover display 154 based on the mirroring.

According to an embodiment, the electronic device 101 may identify data of a sensor (e.g., the sensor 140 of FIG. 2) while displaying a screen within the flexible display 152. Referring to FIG. 3, an example of the screen displayed within the flexible display 152 is illustrated. The electronic device 101 may display the screen within the flexible display 152 based on execution of an application. The application is an application for executing at least one function associated with multimedia content, and may include, for example, an application for reproducing multimedia content including a video. The application may include an application for providing multimedia content associated with a game. The application may include an application for providing multimedia content associated with a video call. Referring to FIG. 3, in a display area of the flexible display 152, the electronic device 101 may output a video 310 based on at least a portion of the screen. In the display area of the flexible display 152, the electronic device 101 may display information 340 associated with the video 310 through another portion distinct from a portion of a screen on which the video 310 is outputted. For example, the electronic device 101 may display the information 340 including a name (e.g., a title) assigned to the video 310 and at least one comment corresponding to the video 310, within the flexible display 152.

In a state of displaying the video 310 through the display area of the flexible display 152, the electronic device 101 may display at least one visual object (e.g., visual objects 320 and 330) associated with mirroring. The at least one visual object may indicate that the video 310 displayed through the flexible display 152 is displayed through another display (e.g., the cover display 154 and/or a display of an external electronic device connected to the electronic device 101) distinct from the flexible display 152, based on a text, an image, and/or an icon. For example, the visual object 330 may be mapped to a function for displaying the video 310 displayed through the flexible display 152 through an external electronic device (e.g., a television, and/or a monitor) connected to the electronic device 101.

For example, the visual object 320 may be mapped to a function for displaying the video 310 displayed through the flexible display 152 through another display (e.g., the cover display 154) distinct from the flexible display 152 in the electronic device 101. Based on identifying that multimedia content such as the video 310 is included in the screen displayed through the flexible display 152, the electronic device 101 according to an embodiment may identify an angle A of the housing 220 and/or the flexible display 152 bent by a folding axis F based on the data identified by the sensor. In a state in which the angle A included in a preset angle range (e.g., the second preset angle range associated with the state 202 of FIG. 2B) is identified, the electronic device 101 may display the visual object 320 within the flexible display 152. Referring to FIG. 3, the electronic device 101 may display the visual object 320 as overlapping on the video 310 within the flexible display 152. However, an embodiment is not limited thereto, and the visual object 320 may be displayed within a portion of the flexible display 152 on which the information 340 is displayed.

According to an embodiment, the electronic device 101 may identify an input indicating to select at least a portion of the screen based on the visual object 320 included in the screen displayed through the flexible display 152. Before identifying the input, the electronic device 101 may output the video 310 by using the flexible display 152 among the flexible display 152 and the cover display 154. The input may be identified by the electronic device 101 based on a gesture of touching and/or clicking the visual object 320. In response to the input, the electronic device 101 may provide options to select distinct portions of the screen displayed through the flexible display 152 to a user. An example of the options will be described with reference to FIG. 4.

Referring to FIG. 3, an example in which the electronic device 101 displays a portion (e.g., a portion of the flexible display 152 on which the video 310 is reproduced) of the screen through the cover display 154 based on the input is illustrated. In an exemplary state of FIG. 3, the electronic device 101 may reproduce the video 310 by using all of the flexible display 152 and the cover display 154 positioned toward distinct directions. An embodiment is not limited thereto, and the electronic device 101 may display an entire screen provided through the flexible display 152 through the cover display 154. Referring to FIG. 3, since the video 310 is reproduced by using all of the flexible display 152 and the cover display 154, all users browsing the electronic device 101 in distinct directions may browse the video 310. In an exemplary state of FIG. 3 in which the video 310 is provided to all distinct users, the electronic device 101 may exclusively provide the information 340 to a specific user among the users through another portion distinct from the portion of the flexible display 152 on which the video 310 is displayed.

Hereinafter, according to an embodiment, an example of a UI displayed by the electronic device 101 within the flexible display 152 based on an input to the visual object 320 will be described with reference to FIG. 4.

FIG. 4 illustrates an example of a screen displayed by an electronic device 101 based on an input indicating to select at least a portion of a screen displayed within a flexible display 152, according to an embodiment. The electronic device 101 of FIG. 4 may be an example of the electronic device 101 of FIG. 1. For example, the electronic device 101, the flexible display 152, and the cover display 154 of FIG. 1 may include the electronic device 101, the flexible display 152, and a cover display 154 of FIG. 4. The electronic device 101 of FIG. 4 may have the form factor described above with reference to FIG. 2A to FIG. 2B. For example, similar to the housing 220 of FIG. 2A to FIG. 2B, a housing 220 of the electronic device 101 of FIG. 4 may include a first sub-housing 221, a second sub-housing 222, and a hinge assembly 223.

A state of the electronic device 101 of FIG. 4 may be associated with a state of the electronic device 101 of FIG. 3. Referring to FIG. 4, an exemplary state in which the electronic device 101 displays a visual object 320 in a state (e.g., a flex state) such as the state 202 of FIG. 2B is illustrated. The electronic device 101 may display the visual object 320 based on a screen displayed through the flexible display 152 and/or a video 310 in the screen. In response to an input indicating to select the visual object 320, the electronic device 101 may display at least one of visual objects 410 and 420 for controlling mirroring of the flexible display 152 and the cover display 154 within the flexible display 152. For example, an input indicating to display options for controlling the mirroring of the flexible display 152 and the cover display 154 may include an input indicating to select the visual object 320.

In an embodiment, the input indicating to display the options for controlling the mirroring of the flexible display 152 and the cover display 154 may be identified based on a preset gesture received through the cover display 154. For example, the preset gesture may include a double-tap gesture in which a point (a point P in an embodiment of FIG. 3) in a display area of the cover display 154 is tapped at a preset number (e.g., twice) of times along an interval less than a preset duration. In response to the preset gesture, the electronic device 101 may display at least one of the visual objects 410 and 420 associated with the mirroring within the flexible display 152.

The visual objects 410 and 420 displayed by the electronic device 101 within the flexible display 152 may be referred to as a pop-up window and/or a menu displayed within the flexible display 152. The electronic device 101 may display at least one of the visual objects 410 and 420 in a state of identifying a posture of the housing 220 and/or the flexible display 152 of the electronic device 101 corresponding to the preset posture described above with reference to FIG. 2B. In the visual object 410, the electronic device 101 may display a plurality of visual objects 411, 412, 413, and 414 corresponding to options to select distinct portions in the screen displayed through the flexible display 152. Each of the plurality of visual objects 411, 412, 413, and 414 may include a preset text for describing a corresponding option. Together with the visual objects 411, 412, 413, and 414 corresponding to each of the options, the electronic device 101 may display a visual object 415 for ceasing a display of the visual object 410. The visual object 415 may include a preset text (e.g., cancel) indicating to cease the display of the visual object 410.

For example, the visual object 411 may correspond, among the options, to an option for displaying the video 310 displayed in the screen through the flexible display 152 within the cover display 154. The state of the electronic device 101 of FIG. 3 may include a state in which the video 310 is reproduced in all of the flexible display 152 and the cover display 154 by an input indicating to select the visual object 411. The visual object 411 may include a preset text (e.g., "copy only video content") indicating that a portion of the screen corresponding to the video 310 is exclusively copied. According to an embodiment, the electronic device 101 may display the visual object 411 based on whether multimedia content such as the video 310 is included in the screen displayed within the flexible display 152. For example, in a state in which the video 310 included in the screen is identified, the electronic device 101 may display the visual object 411.

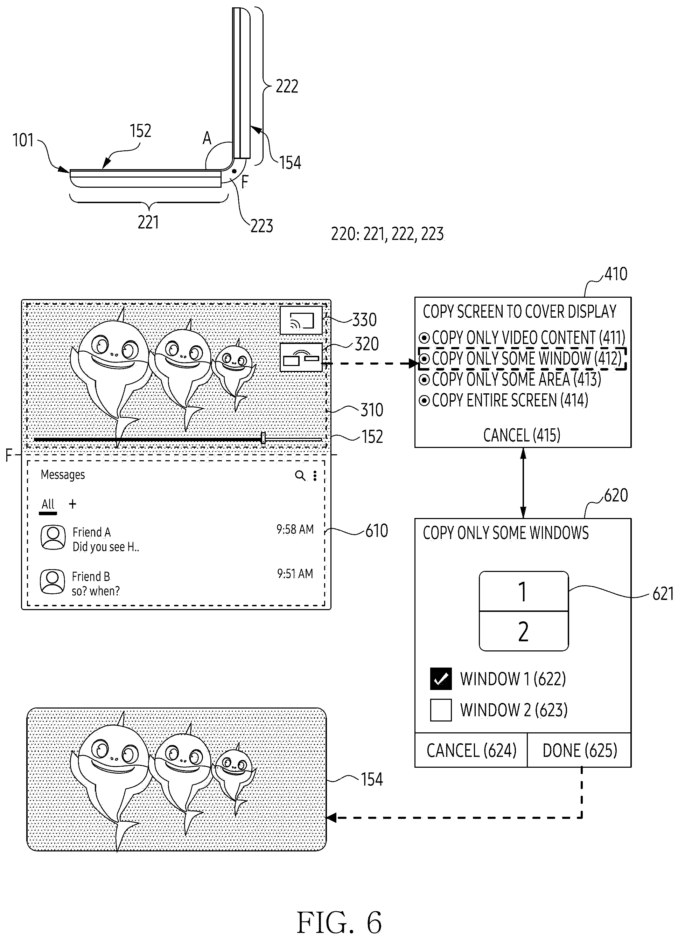

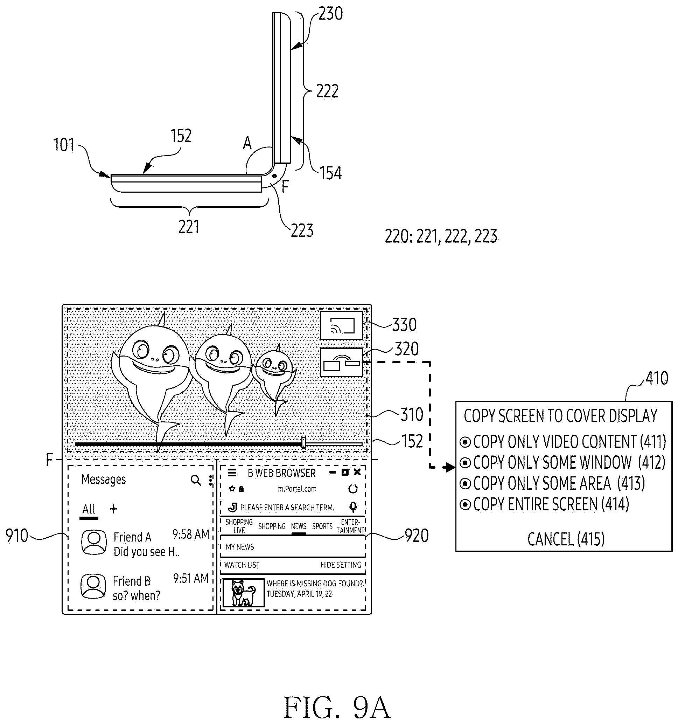

For example, the visual object 412 may correspond, among the options, to an option for displaying at least one area within the cover display 154 among areas that correspond to distinct applications (or processes) displayed through the flexible display 152 and executed by a processor (e.g., the processor 120 of FIG. 2) of the electronic device 101. An operation of the electronic device 101 based on an input indicating to select the visual object 412 will be described with reference to FIG. 6, and/or FIG. 9A to FIG. 9C. The visual object 412 may include a preset text (e.g., "copy only some windows") indicating that at least one of the screens is copied. The electronic device 101 may conditionally display the visual object 412 in a state in which a display area of the flexible display 152 is distinguished by distinct areas for simultaneously displaying a plurality of screens provided from a plurality of applications.

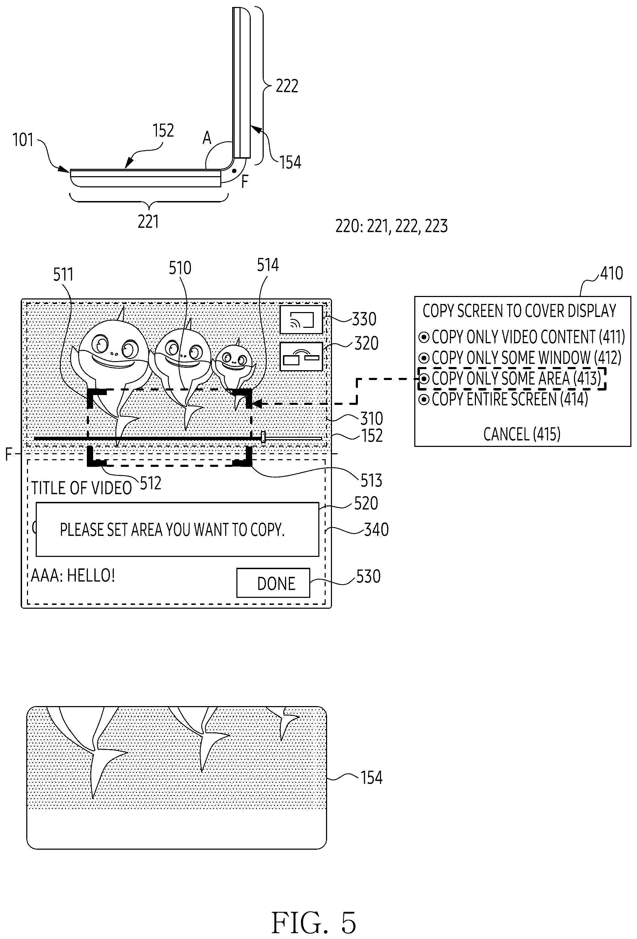

For example, the visual object 413 may correspond, among the options, to an option for displaying a portion of a screen segmented by pixel within the cover display 154. An operation of the electronic device 101 based on an input indicating to select the visual object 413 will be described with reference to FIG. 5. The visual object 413 may include a preset text (e.g., "copy only some area") indicating that the portion in the screen is copied. For example, the visual object 414 may correspond, among the options, to an option for displaying an entire screen displayed through the flexible display 152 within the cover display 154. The visual object 414 may include a preset text (e.g., "copy entire screen") indicating that the entire screen is copied.

Referring to FIG. 4, based on an input indicating that the options for controlling the mirroring of the flexible display 152 and the cover display 154 are displayed, the visual object 420 including a plurality of visual objects 421 and 422 corresponding to the options may be displayed. In the visual object 420, the electronic device 101 may display a visual object 423 for ceasing a display of the visual object 420. The visual object 423 may include a preset text (e.g., close) guiding to cease the display of the visual object 420.

For example, within the visual object 420, the electronic device 101 may display the visual object 421 corresponding to an option for displaying the visual object 410 that includes the options to select the distinct portions of the screen displayed through the flexible display 152. In response to an input indicating to select the visual object 421, the electronic device 101 may display the visual object 410 within the flexible display 152. The visual object 421 may include a preset text (e.g., "change screen to copy") associated with the display of the visual object 410. For example, in the visual object 420, the electronic device 101 may display the visual object 422 corresponding to an option for displaying a visual object 430 for adjusting at least one parameter associated with mirroring based on the flexible display 152 and the cover display 154. In response to an input indicating to select the visual object 422, the electronic device 101 may display the visual object 430 within the flexible display 152. The visual object 422 may include a preset text (e.g., "setting") for guiding a display of the visual object 430.

In response to an input indicating to display the pop-up window (e.g., the visual object 430) for adjusting parameters for the mirroring of the flexible display 152 and the cover display 154, such as the input indicating to select the visual object 422, the electronic device 101 may display the visual object 430 within the flexible display 152. Based on the visual object 430, the electronic device 101 may display visual objects 431, 432, 433, 434, and 435 corresponding to each of the parameters. The visual objects 431, 432, 433, 434, and 435 may include an executable object for adjusting corresponding parameters, such as a radio button, a check box, a text view, and/or a slide bar.

For example, in the visual object 430, the electronic device 101 may display the visual object 431 to adjust whether to identify a touch input based on the cover display 154 while executing the mirroring of the flexible display 152 and the cover display 154. In response to an input indicating to select the visual object 431, the electronic device 101 may toggle whether to identify the touch input based on the cover display 154. The visual object 431 may include a preset text (e.g., "cover display touch prevention") for guiding to cease receiving the touch input through the cover display 154. An embodiment in which the touch input associated with the cover display 154 is adjusted based on the visual object 431 is described, but an embodiment is not limited thereto. For example, the electronic device 101 may display a visual object for toggling whether to identify the touch input through the flexible display 152 in the visual object 430.

For example, in the visual object 430, the electronic device 101 may display the visual object 432 to adjust whether to automatically deactivate identifying the touch input through the cover display 154 based on a preset condition while executing the mirroring of the flexible display 152 and the cover display 154. The preset condition may be associated with a motion of the electronic device 101 identified through a sensor (e.g., the sensor 140 of FIG. 2). For example, in a state of detecting the motion of the electronic device 101 based on the visual object 432, the electronic device 101 may deactivate identifying the touch input through the cover display 154 based on detecting the motion of the electronic device 101 stopped by exceeding a preset duration. The visual object 432 may include a preset text (e.g., "cover display automatic lock") for guiding that receiving the touch input through the cover display 154 cease automatically.

For example, in the visual object 430, the electronic device 101 may display the visual object 433 to adjust whether to guide a posture of the electronic device 101 while executing the mirroring of the flexible display 152 and the cover display 154. In a state of guiding the posture of the electronic device 101 based on the visual object 433, the electronic device 101 may display another visual object for changing the posture based on a positional relationship between the cover display 154 and a user browsing the cover display 154. An example of an operation of displaying the other visual object by the electronic device 101 will be described with reference to FIG. 7. The visual object 433 may include a preset text (e.g., "folding angle optimization notification") indicating to guide the posture of the electronic device 101.

For example, in the visual object 430, the electronic device 101 may display the visual object 434 for adjusting a threshold duration executing the mirroring of the flexible display 152 and the cover display 154. The threshold duration may mean a maximum duration in which the mirroring may be executed in a preset period (e.g., a period corresponding to one day). For example, in the preset period, the electronic device 101 may cease at least temporary execution of the mirroring based on identifying that the mirroring of the flexible display 152 and the cover display 154 is executed exceeding the threshold duration designated by the visual object 434. The visual object 434 may include a preset text (e.g., "setting available time per day") for guiding adjustment of the threshold duration.

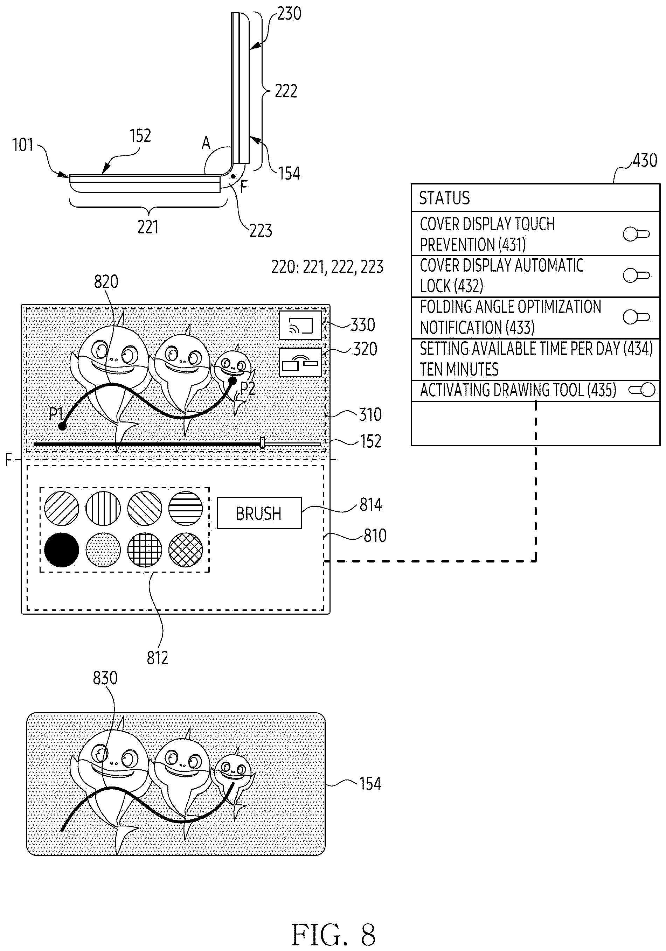

For example, in the visual object 430, the electronic device 101 may display the visual object 435 to adjust whether to change a screen displayed within another display based on an input received through a specific display (e.g., the flexible display 152) based on mirroring of displays (e.g., the flexible display 152 and the cover display 154). For example, based on the visual object 435, another visual object indicating a figure, overlapped on the video 310 and generated by the touch input performed on the flexible display 152, may be displayed within the cover display 154. An example of an operation in which the electronic device 101 displays a figure representing a gesture performed on the flexible display 152 based on the visual object 435 within the cover display 154 will be described with reference to FIG. 8.

As described above, the electronic device 101 according to an embodiment may display at least one of the visual objects 410, 420, and 430 for providing distinct options associated with mirroring of a screen based on the cover display 154 to a user browsing the screen displayed through the flexible display 152. Based on the options, the electronic device 101 may receive an input indicating to select at least a portion of the screen.

Hereinafter, referring to FIG. 5, an example of an operation in which the electronic device 101 according to an embodiment provides a UI for selecting at least a portion of the screen by pixel to the user based on an option corresponding to the visual object 413.

FIG. 5 illustrates an example of a screen displayed by an electronic device 101 based on an input indicating to select at least a portion of a screen displayed within a flexible display 152, according to an embodiment. The electronic device 101 of FIG. 5 may correspond to an example of the electronic device 101 of FIG. 1. For example, the electronic device 101, the flexible display 152, and the cover display 154 of FIG. 1 may include the electronic device 101, the flexible display 152, and a cover display 154 of FIG. 5. The electronic device 101 of FIG. 5 may have the form factor described above with reference to FIG. 2A to FIG. 2B. For example, similar to the housing 220 of FIG. 2A to FIG. 2B, the electronic device 101 of FIG. 5 may include a housing 220 distinguished by a first sub-housing 221, a second sub-housing 222, and a hinge assembly 223.

A state of the electronic device 101 of FIG. 5 may be associated with the state of the electronic device 101 of FIG. 3 to FIG. 4. Referring to FIG. 5, an exemplary state in which the electronic device 101 displays a visual object 320 in a state (e.g., a flex state) such as the state 202 of FIG. 2B is illustrated. In response to an input indicating to select the visual object 320, the electronic device 101 may display a visual object 410 for selecting distinct portions of a screen displayed through the flexible display 152. In the visual object 410, the electronic device 101 may display options corresponding to the distinct portions of the screen displayed through the flexible display 152. The electronic device 101 may display the options based on a preset text, such as visual objects 411, 412, 413, and 414. The visual object 413 may correspond, among the options, to an option for receiving an additional input segmenting a portion of the screen to be displayed through the cover display 154 by pixel.

Referring to FIG. 5, in response to an input indicating to select the visual object 413, the electronic device 101 may cease displaying the visual object 410 within the flexible display 152. In response to the input indicating to select the visual object 413, the electronic device 101 may display a visual object 510 for adjusting a size of an area to be displayed through the cover display 154 within the screen displayed through the flexible display 152. An embodiment in which the electronic device 101 displays the visual object 510 in a shape of a quadrilateral having a boundary line of a broken line is illustrated, a shape of the visual object 510 is not limited thereto.

Referring to FIG. 5, together with the visual object 510, the electronic device 101 may display a visual object 520 for guiding that a portion of the screen within the flexible display 152 segmented by the visual object 510 is displayed through the cover display 154. Together with the visual object 510, the electronic device 101 may display a visual object 530 for verifying that a portion of the screen selected by the visual object 510 is displayed through the cover display 154. Referring to FIG. 5, the visual object 520 may include a preset text (e.g., "Please set area you want to copy") for guiding to select of at least a portion of the screen displayed through the flexible display 152. The visual object 520 may have a shape of a pop-up window. The visual object 530 may have a shape of a button including a preset text (e.g., done).

In an embodiment, based on the visual object 510, the electronic device 101 may receive an input indicating to select at least a portion of the screen to be displayed on all of the flexible display 152 and the cover display 154. The input may include a gesture for adjusting a position, the shape, and/or a size of the visual object 510 displayed within the flexible display 152. The electronic device 101 may identify the gesture based on handles 511, 512, 513, and 514 for emphasizing edges of the visual object 510. For example, based on the gesture of dragging any one of the handles 511, 512, 513, and 514 displayed within the flexible display 152, the electronic device 101 may adjust the position, the shape, and/or the size of the visual object 510. For example, a user may select at least a portion to be copied to the cover display 154 in the screen displayed within the flexible display 152, by deforming the visual object 510 based on the handles 511, 512, 513, and 514.

In response to an input indicating to select the visual object 530, the electronic device 101 may initiate mirroring of the flexible display 152 and the cover display 154 based on an area specified by the visual object 510 within the flexible display 152. Referring to FIG. 5, an example of displaying a portion selected by the visual object 510 within the flexible display 152 through the cover display 154 in response to the input indicating that the electronic device 101 selects the visual object 530 is illustrated. After receiving the input, the electronic device 101 may cease displaying at least one of the visual objects 510, 520, and 530. After receiving the input, within the screen displayed through the flexible display 152, an area distinguished by the visual object 510 may be displayed through all of the flexible display 152 and the cover display 154. Referring to FIG. 5, a portion of a video 310 and a portion of information 340 included in the area may be displayed through the cover display 154 within the screen displayed through the flexible display 152.

As described above, the electronic device 101 according to an embodiment may display the visual object 510 for receiving an input indicating to select by pixel an area to be displayed through all of the flexible display 152 and the cover display 154. Based on the visual object 510, the electronic device 101 may make various options associated with the mirroring of the flexible display 152 and the cover display 154. The electronic device 101 may display a plurality of screens corresponding to a plurality of applications substantially simultaneously within the flexible display 152 by substantially simultaneously executing (e.g., multitasking) the plurality of applications. The plurality of screens may be displayed through distinct areas of the flexible display 152. Hereinafter, an embodiment of the electronic device 101 that provides an option associated with the mirroring of the flexible display 152 and the cover display 154 based on the areas in a state of displaying the plurality of screens through the distinct areas based on multitasking will be described with reference to FIG. 6.

FIG. 6 illustrates an example of a screen displayed by an electronic device 101 based on an input indicating to select at least a portion of a screen displayed within a flexible display 152, according to an embodiment. The electronic device 101 of FIG. 6 may be an example of the electronic device 101 of FIG. 1. For example, the electronic device 101, the flexible display 152, and the cover display 154 of FIG. 1 may include the electronic device 101, the flexible display 152, and a cover display 154 of FIG. 6. The electronic device 101 of FIG. 6 may have the form factor described above with reference to FIG. 2A to FIG. 2B. For example, similar to the housing 220 of FIG. 2A to FIG. 2B, a housing 220 of the electronic device 101 of FIG. 6 may include a first sub-housing 221, a second sub-housing 222, and a hinge assembly 223.

A state of the electronic device 101 of FIG. 6 may be associated with the state of the electronic device 101 of FIG. 3 to FIG. 4. Referring to FIG. 6, an exemplary state in which the electronic device 101 displays a visual object 320 in a state (e.g., a flex state) such as the state 202 of FIG. 2B is illustrated. The visual object 320 may be conditionally displayed in a state that the electronic device 101 displays multimedia content such as a video 310 through the flexible display 152 and a posture of the electronic device 101 corresponds to the preset posture as described above with reference to FIG. 2B. Referring to FIG. 6, the electronic device 101 may simultaneously execute a plurality of applications based on multitasking. For example, the electronic device 101 may display screens corresponding to each of the plurality of applications by using each of distinct portions distinguished by a folding axis F of the flexible display 152. For example, the electronic device 101 may display the video 310 based on a first application for executing a video in a first portion distinguished by the folding axis F. In the example, the electronic device 101 may display a UI 610 based on a second application such as a messenger application in a second portion distinguished by the folding axis F. The first portion in which the video 310 is displayed and the second portion in which the UI 610 is displayed may be referred to as an area (or a window) within the flexible display 152 corresponding to the plurality of applications.

The electronic device 101 may display a visual object 410 within the flexible display 152 in response to an input indicating to select the visual object 320. Referring to FIG. 6, the electronic device 101 that simultaneously executes the plurality of applications based on multitasking may display a visual object 412 corresponding to an option to select at least one area to be copied to the cover display 154 among areas corresponding to each of the plurality of applications in the visual object 410 displayed by the input. For example, based on identifying areas corresponding to distinct applications executed by a processor (e.g., the processor 120 of FIG. 2) of the electronic device 101, within the flexible display 152, the electronic device 101 may display the visual object 412 to select at least a portion of the screen to be displayed through the cover display 154 based on the areas.

Referring to FIG. 6, in response to an input indicating to select the visual object 412 for selecting the at least a portion of the screen based on the areas, the electronic device 101 may display a visual object 620 to select the areas. The electronic device 101 may display the visual object 620 based on a pop-up window overlapping at least one of the areas displayed within the flexible display 152. In the visual object 620, the electronic device 101 may display a preset text (e.g., "copy only some window") indicating a title of the pop-up window. In the visual object 620, the electronic device 101 may display a visual object 621 including an image for describing an arrangement of the areas.

Referring to FIG. 6, in the visual object 620, the electronic device 101 may display visual objects 622 and 623 for adjusting whether to copy each of the areas. Each of the visual objects 622 and 623 may include a visual object (e.g., a checkbox) for receiving an input for adjusting whether to copy an area corresponding to a visual object within the flexible display 152. Each of the visual objects 622 and 623 may include a text (e.g., a name of an application corresponding to the area) for distinguishing the area corresponding to the visual object within the flexible display 152. For example, the visual object 622 may correspond to an option that adjusts whether to copy a first screen corresponding to the first application for displaying the video 310 to the cover display 154. For example, the visual object 623 may correspond to an option that adjusts whether to copy a second screen corresponding to the second application for displaying the UI 610 to the cover display 154. In an embodiment of FIG. 6 in which the visual objects 622 and 623 include check boxes, the electronic device 101 may visualize whether each of the first screen and the second screen corresponding to each of the visual objects 622 and 623 is to be copied to the cover display 154, based on the check boxes. Referring to the check boxes included in each of the visual objects 622 and 623 of FIG. 6, it is assumed that a user selects the first screen among the first screen and the second screen as a screen to be copied to the cover display 154.

Referring to FIG. 6, in the visual object 620, the electronic device 101 may display a visual object 624 for ceasing a display of the visual object 620, and/or a visual object 625 for receiving an input indicating that mirroring of the flexible display 152 and the cover display 154 is initiated based on the visual object 620. The visual object 624 may have a shape of a button including a preset text (e.g., cancel) for guiding cessation of the display of the visual object 620. The visual object 625 may have a shape of a button including a preset text (e.g., done) for guiding that the mirroring of the flexible display 152 and the cover display 154 is initiated. In the assumption, in response to an input indicating to select the visual object 625, the electronic device 101 may display the video 310 displayed through the flexible display 152 within the cover display 154. Referring to FIG. 6, an exemplary state in which the electronic device 101 displays the video 310 by using all of the flexible display 152 and the cover display 154 is illustrated.

As described above, in a state in which screens of the plurality of applications are displayed through distinct areas within the flexible display 152, the electronic device 101 according to an embodiment may control the mirroring of the flexible display 152 and the cover display 154 based on the areas. In order to control the mirroring of the flexible display 152 and the cover display 154 based on the areas, the electronic device 101 may display a visual object (e.g., the visual objects 412 and 620) for receiving an input indicating to select at least one of the areas.

According to an embodiment, the electronic device 101 may guide a change in a posture of the electronic device 101 in order to improve convenience of at least one user browsing the flexible display 152 and/or the cover display 154 in a state of executing the mirroring of the flexible display 152 and the cover display 154. Hereinafter, an embodiment in which the electronic device 101 guides the change in the posture will be described with reference to FIG. 7.

FIG. 7 illustrates an example of an operation in which an electronic device 101 obtains information associated with a user browsing a cover display 154, according to an embodiment. The electronic device 101 of FIG. 7 may be an example of the electronic device 101 of FIG. 1. For example, the electronic device 101, the flexible display 152, and the cover display 154 of FIG. 1 may include the electronic device 101, a flexible display 152, and the cover display 154 of FIG. 7. The electronic device 101 of FIG. 7 may have the form factor described above with reference to FIG. 2A to FIG. 2B. For example, similar to the housing 220 of FIG. 2A to FIG. 2B, a housing 220 of the electronic device 101 of FIG. 7 may include a first sub-housing 221, a second sub-housing 222, and a hinge assembly 223.

A state of the electronic device 101 of FIG. 7 may be associated with the state of the electronic device 101 of FIG. 3 to FIG. 6. Referring to FIG. 7, a state in which the electronic device 101 executes mirroring based on the flexible display 152 and the cover display 154 in a state (e.g., a flex state) such as the state 202 of FIG. 2B is illustrated. Based on the mirroring of the flexible display 152 and the cover display 154, the electronic device 101 may provide a video 310 to distinct users browsing each of the flexible display 152 and the cover display 154 substantially simultaneously. The electronic device 101 may display a message associated with the electronic device 101 and/or a posture of at least one of the users based on information associated with the at least one of the users. In order to obtain the information, the electronic device 101 may include a camera positioned on a surface of the housing 220 on which the flexible display 152 and/or the cover display 154 are positioned. For example, the electronic device 101 may include a camera 230 at least partially exposed to the outside through a surface (e.g., the second surface 222-2 of the second sub-housing 222 of FIG. 2B) on which the cover display 154 is positioned.

Referring to FIG. 7, in a state of activating all of the flexible display 152 and the cover display 154, the electronic device 101 may obtain information associated with a user browsing the cover display 154 by using the camera 230. For example, in a state of displaying at least a portion (the video 310 in an exemplary case of FIG. 7) of a screen displayed through the flexible display 152 in the cover display 154, the electronic device 101 may obtain at least one image from the camera 230. An image 710 of FIG. 7 may be an example of the at least one image obtained through the camera 230 in the state. According to an embodiment, the electronic device 101 may display a visual object guiding a movement of a subject or a change in a posture of the housing 220 through at least one of the flexible display 152 or the cover display 154, based on at least one of a position or a size of the subject classified into a preset category (e.g., a face) and included in the at least one image.

Referring to FIG. 7, in a state of obtaining the image 710 using the camera 230, the electronic device 101 may identify a visual object 715 representing a subject in a preset category in the image 710. The electronic device 101 may identify the visual object 715 based on a model for analyzing one or more feature points included in the image 710. The model may include an artificial intelligence model (e.g., an artificial intelligence model based on a convolutional neural network (CNN) topology) mathematically modeling nerves of a living organism. The visual object 715 may correspond to a face of a user browsing a surface of the second sub-housing 222 in which the camera 230 and/or the cover display 154 is positioned. Based on a position and/or a size of the visual object 715 in the image 710, the electronic device 101 may identify a user browsing the cover display 154.

The electronic device 101 may identify a positional relationship between the user browsing the cover display 154 and the electronic device 101 based on the visual object 715 in the image 710. For example, based on the position of the visual object 715 in the image 710, the electronic device 101 may identify an angle and/or a direction between the cover display 154 and the user. For example, based on the size of the visual object 715 included in the image 710, the electronic device 101 may identify a distance between the cover display 154 and the user. The positional relationship identified by the electronic device 101 may include at least one of the angle, the direction, and the distance. According to an embodiment, the electronic device 101 may display a visual object for guiding the electronic device 101 suitable for browsing a screen (e.g., a screen including the video 310) displayed through the cover display 154 and/or a posture of the user, based on the positional relationship.

Referring to FIG. 7, an exemplary state in which the electronic device 101 according to an embodiment displays a plurality of visual objects 720 and 730 for guiding the electronic device 101 suitable for browsing the screen displayed through the cover display 154 and/or the posture of the user is illustrated. In case that the size of the visual object 715 included in the image 710 is greater than a preset size (e.g., a first threshold size), the electronic device 101 may display at least one of the plurality of visual objects 720 and 730. The visual objects 720 and 730 may have a shape of a pop-up window (e.g., toast) overlapping on a screen displayed in each of the flexible display 152 and the cover display 154. For example, the electronic device 101 may guide a specific user browsing the flexible display 152 to change a posture of another user browsing the cover display 154, by using the visual object 720 displayed within the flexible display 152. The visual object 720 may include a preset text (e.g., "The distance between the child and the terminal is within 20 cm. Please guide them to maintain an appropriate distance.") indicating to change the posture of the other user. For example, the electronic device 101 may output a preset text (e.g., "Too close. Please move back a little. ") indicating to change the posture of the other user to the other user browsing the flexible display 152 using the visual object 730 displayed in the cover display 154. An exemplary state in which the plurality of visual objects 720 and 730 are simultaneously displayed through each of the flexible display 152 and the cover display 154 is illustrated, but an embodiment is not limited thereto. For example, the electronic device 101 may selectively display at least one of the plurality of visual objects 720 and 730.

An exemplary case guiding a distance between the user browsing the cover display 154 and the cover display 154 based on the plurality of visual objects 720 and 730 is illustrated, but an embodiment is not limited thereto. For example, based on identifying the visual object 715 less than a preset size (e.g., a second threshold size less than the first threshold size) from the image 710, or not identifying a subject in a preset category, such as the visual object 715, from the image 710, the electronic device 101 may display a visual object confirming whether to cease the mirroring of the flexible display 152 and the cover display 154. The visual object may have the shape of the pop-up window overlapping on the screen displayed within the flexible display 152. The electronic device 101 may display, in the visual object, a preset text (e.g., "The child is not staring at the terminal, should I maintain video copy?") for confirming whether to cease the mirroring of the flexible display 152 and the cover display 154. Based on identifying an input indicating to cease the mirroring through the visual object, the electronic device 101 may at least temporarily cease displaying at least a portion of the screen displayed through the flexible display 152 within the cover display 154.

According to an embodiment, the electronic device 101 may display a visual object guiding an angle between the user browsing the cover display 154 and the cover display 154 based on the position of the visual object 715 included in the image 710. For example, the electronic device 101 may identify the angle based on a distance between a center point of the image 710 and a point (e.g., a center point of the visual object 715) in the visual object 715. The angle between the user browsing the cover display 154 and the cover display 154 may indicate a difference between a direction of the cover display 154 and a direction of a gaze of the user staring at the cover display 154. For example, the electronic device 101 may identify whether the user obliquely browses the cover display 154 based on the position of the visual object 715 included in the image 710. An embodiment is not limited thereto, and the electronic device 101 may identify whether the user obliquely browses the cover display 154 based on an angle A of a folding axis F identified based on data of a sensor (e.g., the sensor 140 of FIG. 2A).

In an embodiment, based on identifying that the user obliquely browsing the cover display 154, the electronic device 101 may display a visual object for changing an angle between the user and the cover display 154. The visual object may include a preset text recommending a change in the angle. For example, in a case of displaying the visual object through the flexible display 152, the electronic device 101 may display a preset text (e.g., "Please move the terminal to the right so that the child may see the terminal directly," and/or " Please open the terminal approximately 10 degrees so that the child may see the terminal directly") indicating that a specific user browsing the flexible display 152 changes a posture of another user browsing the cover display 154 and/or a posture of the electronic device 101, in the visual object. For example, in a case of displaying the visual object through the cover display 154, the electronic device 101 may display a preset text (e.g., "Please move a little to the left," and/or "Please adjust the terminal angle") indicating changing the posture of the other user browsing the cover display 154 and/or the posture of electronic device 101.

An embodiment in which the electronic device 101 obtains the information associated with the user browsing the cover display 154 is described, but an embodiment is not limited thereto. For example, the electronic device 101 may include a camera positioned on a surface (e.g., the first surface 221-1 of the first sub-housing 221 and/or the first surface 222-1 of the second sub-housing 222 of FIG. 2B) of the housing 220 on which the flexible display 152 is positioned to obtain information associated with the user browsing the flexible display 152. Based on an image obtained using the camera, the electronic device 101 may perform an operation similar to the operation described above based on the image 710.

As described above, in a state of executing the mirroring based on the flexible display 152 and the cover display 154, the electronic device 101 according to an embodiment may guide a positional relationship between the user browsing the flexible display 152 and/or the cover display 154, and the electronic device 101. Based on guiding the positional relationship, the electronic device 101 may improve user experience of the user browsing the flexible display 152 and/or the cover display 154.

In the state of executing the mirroring based on the flexible display 152 and the cover display 154, the electronic device 101 may execute a function for interaction between the user browsing the flexible display 152 and the other user browsing the cover display 154. The function may include a function of overlapping a visual object representing a touch input received from any one of the users on content (the video 310 in an embodiment of FIG. 7) commonly displayed to the users by the mirroring. Hereinafter, an example of a UI displayed by the electronic device 101 based on the function for interaction between the user browsing the flexible display 152 and the other user browsing the cover display 154 will be described with reference to FIG. 8.

FIG. 8 illustrates an example of an operation in which an electronic device 101 changes a screen displayed through a cover display 154 based on a touch input performed on a flexible display 152, according to an embodiment. The electronic device 101 of FIG. 8 may be an example of the electronic device 101 of FIG. 1. For example, the electronic device 101, the flexible display 152, and the cover display 154 of FIG. 1 may include the electronic device 101, the flexible display 152, and the cover display 154 of FIG. 8. The electronic device 101 of FIG. 8 may have the form factor described above with reference to FIG. 2A to FIG. 2B. For example, similar to the housing 220 of FIG. 2A to FIG. 2B, a housing 220 of the electronic device 101 of FIG. 8 may include a first sub-housing 221, a second sub-housing 222, and a hinge assembly 223.

A state of the electronic device 101 of FIG. 8 may be associated with the state of the electronic device 101 of FIG. 3 to FIG. 7. Referring to FIG. 8, a state in which the electronic device 101 executes mirroring based on the flexible display 152 and the cover display 154 is illustrated in a state (e.g., a flex state) such as the state 202 of FIG. 2B. Based on the mirroring of the flexible display 152 and the cover display 154, the electronic device 101 may provide a video 310 substantially simultaneously to distinct users browsing each of the flexible display 152 and the cover display 154. In a state of displaying a first portion (e.g., a portion in the flexible display 152 on which the video 310 is displayed) of the flexible display 152 within the cover display 154, the electronic device 101 may visualize a touch input performed on the first portion by using all of the flexible display 152 and the cover display 154. For example, in response to the touch input, the electronic device 101 may display a visual object representing the touch input through all of the flexible display 152 and the cover display 154.

Referring to FIG. 8, based on a visual object 435, the electronic device 101 may receive an input indicating to change a screen displayed through all of the flexible display 152 and the cover display 154 based on the touch input on the flexible display 152. In a state of receiving the input associated with the visual object 435, the electronic device 101 may display a UI 810 associated with the touch input on the first portion within the flexible display 152 in a second portion distinct from the first portion copied to the cover display 154. Referring to FIG. 8, in the state, in response to the touch input on the first portion, the electronic device 101 may display visual objects 820 and 830 in the flexible display 152 and the cover display 154, respectively. In case that the touch input is identified based on an external object (e.g., fingertips in contact with the flexible display 152) being dragged from a point P1 to a point P2 in the first portion of the flexible display 152, the electronic device 101 may display the visual objects 820 and 830 representing a trajectory in which the external object is dragged on all of the flexible display 152 and the cover display 154. For example, the visual objects 820 and 830 may have a shape of a stroke representing the trajectory.

Referring to FIG. 8, the visual objects 820 and 830 displayed in response to the touch input on the first portion may have a shape based on a parameter adjusted based on the UI 810. For example, through a portion 812 of the UI 810, the electronic device 101 may display visual objects corresponding to distinct colors. In response to the touch input, the electronic device 101 may display the visual objects 820 and 830 having a color selected based on the visual objects displayed through the portion 812 within the flexible display 152 and the cover display 154. For example, based on a visual object 814 of the UI 810, the electronic device 101 may receive an input indicating to adjust a type of the stroke to be displayed by the touch input in the first portion. The type may be distinguished by tangible writing supplies, such as a brush, a pencil, and/or a pen. In an exemplary case of FIG. 8 in which a type associated with the brush is selected based on the visual object 814, the electronic device 101 may display the visual objects 820 and 830 having a shape similar to a stroke drawn based on the brush in response to the touch input within the flexible display 152 and the cover display 154.

As described above, according to an embodiment, the electronic device 101 may visualize the touch input on the first portion of the flexible display 152 copied to all of the flexible display 152 and the cover display 154 by using all of the flexible display 152 and the cover display 154. The electronic device 101 may display, such as the UI 810, a screen for changing one or more parameters associated with a shape (e.g., a color and/or a thickness) of the visual object (e.g., the visual objects 820 and 830) representing the touch input by using the second portion of the flexible display 152 distinct from the first portion. Since the visual object representing the touch input is visualized using all of the flexible display 152 and the cover display 154, the electronic device 101 may provide handwriting based on the touch input on the flexible display 152 to a user browsing the cover display 154 distinct from the flexible display 152.

Referring to FIG. 2B to FIG. 8, the electronic device 101 may execute a function associated with mirroring based on a direction of a portion (e.g., the second sub-housing 222) of the housing 220 in which all of the cover display 154 and the flexible display 152 are positioned. For example, in case that an angle A is included in the second preset angle range of FIG. 2B and the second sub-housing 222 is positioned toward another direction (e.g., a direction perpendicular to a direction of an acceleration of gravity) distinct from the direction of the acceleration of gravity, a portion of the cover display 154 and flexible display 152 positioned on the second sub-housing 222 may be positioned toward distinct users. The electronic device 101 may display a UI for controlling a screen of the portion of the cover display 154 and flexible display 152 positioned to the distinct users. Hereinafter, an example of an operation in which the electronic device 101 controls the screen of the portion of the cover display 154 and flexible display 152 will be described with reference to FIG. 9A to FIG. 9C.

FIG. 9A to FIG. 9C illustrate an example of an operation performed based on an input indicating that an electronic device 101 selects at least one of screens being displayed through a flexible display 152 and corresponding to each of a plurality of applications, according to an embodiment. The electronic device 101 of FIG. 9A to FIG. 9C may be an example of the electronic device 101 of FIG. 1. For example, the electronic device 101, the flexible display 152, and the cover display 154 of FIG. 1 may include the electronic device 101, the flexible display 152, and a cover display 154 of FIG. 9A to FIG. 9C. The electronic device 101 of FIG. 9A to FIG. 9C may have the form factor described above with reference to FIG. 2A to FIG. 2B. For example, similar to the housing 220 of FIG. 2A to FIG. 2B, a housing 220 of the electronic device 101 of FIG. 9A to FIG. 9C may include a first sub-housing 221, a second sub-housing 222, and a hinge assembly 223.

A state of the electronic device 101 of FIG. 9A to FIG. 9C may be associated with the state of the electronic device 101 of FIG. 3 to FIG. 7. Referring to FIG. 9A, the electronic device 101 may identify that a posture of the electronic device 101 corresponds to a preset posture including the state 202 of FIG. 2B, by using a sensor (e.g., the sensor 240 of FIG. 2A). In a state in which the posture of the electronic device 101 corresponds to the preset posture, the electronic device 101 may display a visual object 320 for mirroring of the flexible display 152 and the cover display 154. In the state, the visual object 320 may be conditionally displayed based on whether multimedia content is included in a screen displayed through the flexible display 152. Referring to FIG. 9A, in the state in which a video 310 is displayed through the flexible display 152, the electronic device 101 may display the visual object 320 as overlapping on the video 310. Referring to FIG. 9A, the electronic device 101 may substantially simultaneously execute a second application and a third application corresponding to areas 910 and 920 distinct from an area in which the video 310 is displayed within the flexible display 152, together with a first application for reproducing the video 310. For example, based on execution of the second application, the electronic device 101 may display a UI for exchanging a message in the area 910. For example, based on execution of the third application, the electronic device 101 may display a UI for browsing a web page in the area 920.

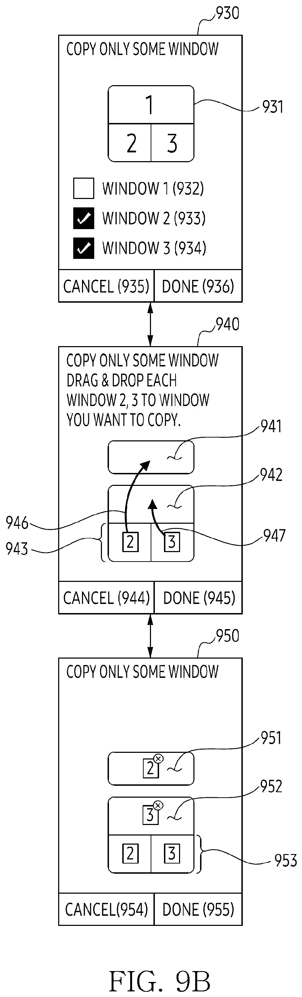

As in FIG. 9A, in response to an input indicating to select the visual object 320 in a state of displaying screens (e.g., an activity and/or a window) provided from a plurality of applications using distinct areas of the flexible display 152, the electronic device 101 may display a visual object 412 corresponding to an option for selectively copying at least one of the screens to the cover display 154. Referring to FIG. 9B, in response to an input indicating to select the visual object 412, the electronic device 101 may display a visual object 930 having a shape of a pop-up window within the flexible display 152. The visual object 930 may have a shape similar to the visual object 620 of FIG. 6. For example, the electronic device 101 may display a visual object 931 in the visual object 930, including an image to describe an arrangement of the screens displayed within the flexible display 152. For example, the electronic device 101 may display visual objects 932, 933, and 934 in the visual object 930 to adjust whether to copy each of the screens. The electronic device 101 may display whether to copy a corresponding screen based on a check box, similar to the visual objects 622 and 623 of FIG. 6, based on each of the visual objects 932, 933, and 934. In the visual object 930, the electronic device 101 may display a visual object 935 having a shape of a button for ceasing a display of the visual object 930, and a visual object 936 having a shape of a button for confirming selection of at least one screen based on the visual objects 932, 933, and 934.

Referring to FIG. 9B, in response to an input indicating to select the visual object 936 in a state in which screens corresponding to the areas 910 and 920 are selected based on the visual objects 933 and 934 corresponding to each of the areas 910 and 920 of FIG. 9A, the electronic device 101 may display a visual object 940 having a shape of a pop-up window. The visual object 940 may be displayed within the flexible display 152 by the electronic device 101 to select a screen to be displayed on a portion of the flexible display 152 and the cover display 154 positioned on distinct surfaces of the second sub-housing 222 among screens selected by the visual object 930. The electronic device 101 may display a visual object 941 corresponding to the cover display 154 in the visual object 940. The electronic device 101 may display, in the visual object 940, a visual object 942 corresponding to a portion of the flexible display 152 positioned on another surface opposite to a surface of the second sub-housing 222 in which the cover display 154 is positioned. The electronic device 101 may display, in the visual object 940, a visual object 943 corresponding to another portion distinct from the portion of the flexible display 152 corresponding to the visual object 942.

Based on a gesture performed between the visual objects 941 and 943, the electronic device 101 may identify a screen to be displayed through the cover display 154 among the screens selected based on the visual object 930. For example, the electronic device 101 may identify a first input indicating to display a screen corresponding to the area 910 through the cover display 154, based on a drag-and-drop gesture directed from the visual object 943 to the visual object 941, based on a trajectory 946. Based on a gesture performed between the visual objects 942 and 943, the electronic device 101 may identify a screen to be displayed through a portion of the flexible display 152 positioned on the other surface of the second sub-housing 222 opposite to the cover display 154. For example, the electronic device 101 may identify a second input indicating to display a screen corresponding to the area 920 through the portion of the flexible display 152, based on a drag-and-drop gesture directed from the visual object 943 to the visual object 942, based on a trajectory 947.

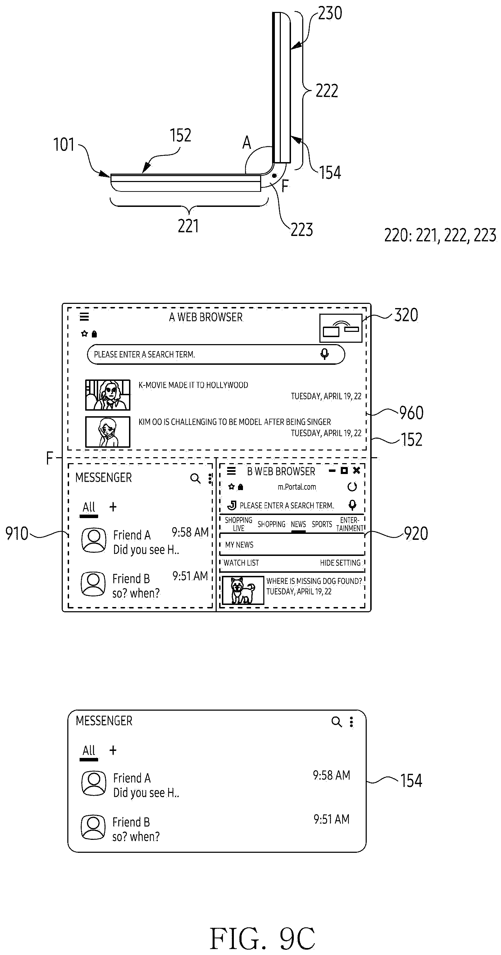

A visual object 950 of FIG. 9B is displayed within the flexible display 152 by the electronic device 101 and illustrates a state of the visual object 940 after identifying the first input and the second input. Each of visual objects 951, 952, 953, 954, and 955 included in the visual object 950 may correspond to each of the visual objects 941, 942, 943, 944, and 945 included in the visual object 940. In response to the first input, the electronic device 101 may display, in the visual object 951, a first icon selected by the first input and representing the screen corresponding to the area 910. The first icon may be displayed in the visual object 951 together with a preset button for ceasing a display of the first icon. In response to the second input, the electronic device 101 may include, in the visual object 952, a second icon selected by the second input and representing the screen corresponding to the area 920. The second icon may be displayed in the visual object 952 together with a preset button for ceasing a display of the second icon. In response to an input indicating to select the visual object 955 of FIG. 9B, the electronic device 101 may be switched to a state of displaying screens within the flexible display 152 and the cover display 154 based on an arrangement represented by the visual objects 951, 952, and 953. FIG. 9C illustrates the state switched in response to the input indicating to select the visual object 955.

Referring to FIG. 9C, within the cover display 154, the electronic device 101 may display the screen selected by the first input and corresponding to the area 910. For example, the screen corresponding to the area 910 may be displayed through all of the flexible display 152 and the cover display 154. Meanwhile, within the flexible display 152, the electronic device 101 may display the screen selected by the second input and corresponding to the area 920 in a portion 960 of the flexible display 152 positioned on another surface opposite to a surface of the second sub-housing 222 in which the area 920 and the cover display 154 are positioned. Referring to FIG. 9C, in an exemplary state in which the second sub-housing 222 is positioned toward distinct users, the electronic device 101 may provide distinct user experience to users browsing the portion 960 and the cover display 154 by adjusting the screen displayed on the portion 960 of the flexible display 152 and the cover display 154.

As in FIG. 2A to FIG. 2B, and/or FIG. 3 to FIG. 9, the operation of the electronic device 101 based on the flexible display 152 and the cover display 154 is described, but an embodiment is not limited thereto. Hereinafter, an operation of the electronic device 101 having another form factor distinct from the exemplary form factor of FIG. 2A to FIG. 2B will be described with reference to FIG. 10.

FIG. 10 illustrates an example of an operation in which an electronic device 101-1 displays at least a portion of a screen displayed on a first portion 1010 of a flexible display 152 on a second portion 1020 of the flexible display 152 distinct from the first portion 1010. The electronic device 101-1 of FIG. 10 may be an example of the electronic device 101 of FIG. 1. For example, the flexible display 152 of FIG. 1 may include the flexible display 152 of FIG. 10.

Referring to FIG. 10, the flexible display 152 may be folded at an angle (e.g., an obtuse angle) greater than a straight angle by a folding axis F. The electronic device 101 may identify an angle A of the flexible display 152 folded by the folding axis F based on data identified by a sensor (e.g., the sensor 140 of FIG. 1). In response to identifying the angle A included in a preset angle range being greater than the straight angle, the electronic device 101 may be switched to a preset state selectively activating any one of the portions 1010 and 1020 of the flexible display 152. The portions 1010 and 1020 may correspond to distinct portions of a housing 220 of the electronic device 101 distinguished by the folding axis F. For example, the portions 1010 and 1020 may be distinguished by the folding axis F. In a state in which the first portion 1010 of the portions 1010 and 1020 is selectively activated,

Referring to FIG. 10, an example of the screen displayed by the electronic device 101 in the first portion 1010 of the flexible display 152 based on an application for reproducing multimedia content such as a video 310 is illustrated. Together with the video 310 in the first portion 1010, the electronic device 101 may display information 1015 provided by the application. The information 1015 may include a text, an image, and/or an icon associated with the video 310, similar to the information 340 of FIG. 3.

In the state in which the first portion 1010 of the portions 1010 and 1020 is selectively activated, the electronic device 101 may display visual objects 320-1 and 330 for mirroring at least a portion of the screen displayed through the first portion 1010. The visual object 330 may correspond to a function for transmitting at least a portion of the screen displayed through the first portion 1010 to an external electronic device distinct from the electronic device 101 similar to the visual object 330 of FIG. 3. The visual object 320-1 may correspond to a function for copying to the second portion 1020 distinct from the first portion 1010 within the flexible display 152.

According to an embodiment, the electronic device 101 may display the visual object 320-1 based on whether the multimedia content is included in the screen displayed through the first portion 1010. For example, in an exemplary state of FIG. 10 in which the video 310 is displayed through the screen, the electronic device 101 may display the visual object 320-1 as overlapping on the video 310. Based on the visual object 320-1, the electronic device 101 may identify an input indicating to select at least a portion of the screen to be displayed through the second portion 1020. Based on the input, the electronic device 101 may display a portion of the screen displayed through the first portion 1010 in the second portion 1020. Referring to FIG. 10, an exemplary state in which the electronic device 101 displays the video 310 in the screen displayed through the first portion 1010 in the second portion 1020 is illustrated. In a state of FIG. 10, the electronic device 101 may display a screen on each of the first portion 1010 and the second portion 1020 based on the folding axis F. For example, an upper end of a first screen displayed through the first portion 1010 and an upper end of a second screen displayed through the second portion 1020 and matched to at least a portion (the video 310 in the exemplary state of FIG. 10) of the first screen may correspond to the folding axis F of the flexible display 152. For example, the folding axis F distinct from any edges of the flexible display 152 may be the upper end of the first screen and the second screen.

An operation of the electronic device 101 associated with the visual object 320-1 may be performed similarly to the operation of the electronic device 101 described above with reference to FIG. 3 to FIG. 8, and/or FIG. 9A to FIG. 9C. Functions of the electronic device 101 described above with reference to FIG. 3 to FIG. 8, and/or FIG. 9A to FIG. 9C, and executed for mirroring of the cover display and the flexible display 152 may be mapped to functions executed for mirroring of the first portion 1010 and the second portion 1020 of the flexible display 152 based on the visual object 320-1. For example, the electronic device 101 may display at least one visual object corresponding to distinct options for activating and/or controlling the mirroring of the first portion 1010 and the second portion 1020, based on an input indicating to select the visual object 320-1, such as the visual objects 410, 420, and 430 of FIG. 4. For example, the electronic device 101, such as the visual object 410, may display a visual object including options for selecting distinct portions of the screen displayed through the first portion 1010, in response to the input indicating to select the visual object 320-1 in the first portion 1010. The options may include, for example, an option for displaying the video 310 through all of the first portion 1010 and the second portion 1020. For example, the options may include an option for selectively copying at least one of the screens to the second portion 1020 in a state in which screens corresponding to a plurality of applications executed by the electronic device 101 are displayed through the first portion 1010.

As described above, in a state that distinct portions (e.g., the first portion 1010 to the second portion 1020) of the flexible display 152 are positioned in distinct directions, due to a shape of the flexible display 152, the electronic device 101 may display the visual object 320-1 for executing mirroring based on the portions. Based on an input associated with the visual object 320-1, the electronic device 101 may display at least a portion of the first portion 1010 through the second portion 1020. The electronic device 101 may provide matched user experience to distinct users browsing the portions, by displaying matched content on the portions positioned in distinct directions.

Hereinafter, operations performed by the electronic device 101 according to an embodiment will be described with reference to FIG. 11 to FIG. 13.

FIG. 11 illustrates an exemplary flowchart for describing an operation of an electronic device according to an embodiment. The electronic device of FIG. 11 may include the electronic device 101 of FIG. 1 to FIG. 8 and/or FIG. 9A to FIG. 9C. An operation of the electronic device based on the flowchart of FIG. 11 may be performed by, for example, the electronic device 101 and/or the processor 120 of FIG. 1.

Referring to FIG. 11, in an operation 1110, the electronic device according to an embodiment may display a screen within a flexible display. The flexible display may include the flexible display 152 of FIG. 1. Based on one or more applications executed by a processor, the electronic device may display one or more screens corresponding to the one or more applications within the flexible display.

Referring to FIG. 11, in an operation 1120, the electronic device according to an embodiment may obtain data associated with a posture of a housing in which the flexible display is positioned, by using one or more sensors. The one or more sensors may include the sensor 140 of FIG. 1. The housing may include the housing 220 of FIG. 2A to FIG. 2B, FIG. 3 to FIG. 8, and/or FIG. 9A to FIG. 9C. In an embodiment in which the flexible display is deformable by the housing, a posture of the housing may indicate a posture of the flexible display.

Referring to FIG. 11, in an operation 1130, the electronic device according to an embodiment may determine whether a preset posture for activating all of the flexible display and a cover display is identified based on the data obtained based on the operation 1120. Based on the data, the electronic device may identify an angle (e.g., the angle A of FIG. 2A to FIG. 2B) of the housing and/or the flexible display bent by a folding axis (e.g., the folding axis F of FIG. 2A to FIG. 2B) formed in the housing. Based on the data, the electronic device may indicate a direction of at least a portion of the flexible display. The preset posture may include the preset posture described above with reference to FIG. 2A to FIG. 2B. For example, the preset posture may include a posture of the electronic device in a flex state, such as in the state 202 of FIG. 2B. Before identifying the posture of the electronic device corresponding to the preset posture based on the obtained data (1130-No), the electronic device may maintain obtaining data based on the operation 1120.

In a state of identifying the preset posture based on the data of the operation 1120 (1130-Yes), in an operation 1140, according to an embodiment, the electronic device may display at least a portion of a screen within the cover display based on an input indicating to select at least a portion of the screen displayed within the flexible display. The input may include a gesture of selecting the visual object 320 of FIG. 3 and/or another visual object (e.g., the visual objects 410, 420, and 430 of FIG. 4) displayed based on the visual object 320. For example, a state in which the electronic device activates all of the flexible display and capacitance based on the operation 1140 may include exemplary states illustrated in FIG. 3, FIG. 5 to FIG. 8, and FIG. 9C.

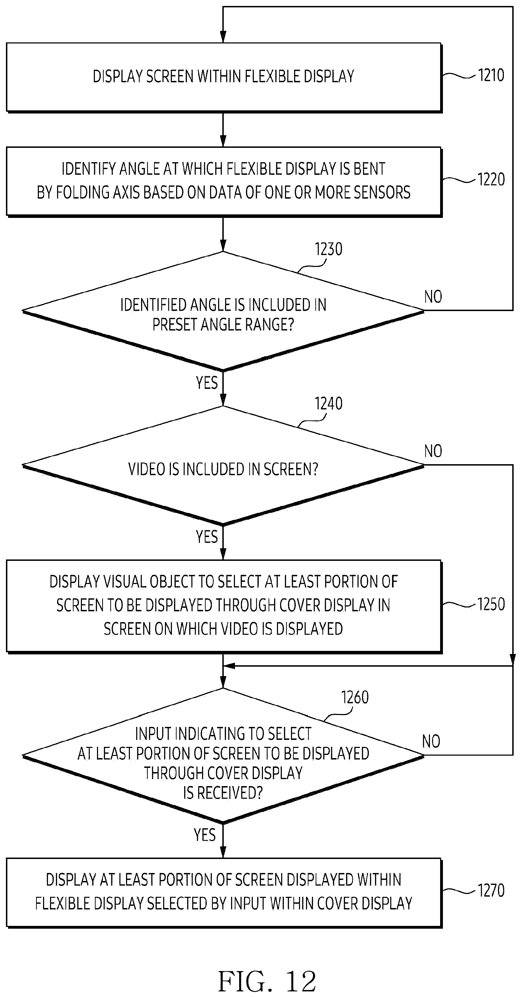

FIG. 12 illustrates an exemplary flowchart for describing an operation of an electronic device according to an embodiment. The electronic device of FIG. 12 may include the electronic device of FIG. 1 to FIG. 11. An operation of the electronic device based on the flowchart of FIG. 12 may be performed by, for example, the electronic device 101 and/or the processor 120 of FIG. 1.

Referring to FIG. 12, in an operation 1210, the electronic device according to an embodiment may display a screen within a flexible display. The electronic device may perform the operation 1210 of FIG. 12 similar to the operation 1110 of FIG. 11. In an operation 1220 of FIG. 12, the electronic device according to an embodiment may identify an angle at which the flexible display is bent by a folding axis based on data of one or more sensors. The operation 1220 of FIG. 12 may be performed based at least on the operation 1120 of FIG. 11.

Referring to 12, in an operation 1230, the electronic device according to an embodiment may determine whether the angle identified based on the operation 1220 is included in a preset angle range. The preset angle range of the operation 1230 may include the second preset angle range described above with reference to FIG. 2A to FIG. 2B. In a state in which an angle distinct from the preset angle range is identified (1230-No), the electronic device may maintain monitoring the angle while displaying the screen within the flexible display based on the operations 1210 and 1220.

In a state of identifying the angle included in the preset angle range of the operation 1230 (1230-Yes), in an operation 1240, the electronic device according to an embodiment may determine whether a video is included in the screen. For example, the electronic device may identify whether multimedia content, such as the video 310 of FIG. 3, is displayed through the flexible display based on the operation 1210.

In a state in which the video is included in the screen (1240-Yes), in an operation 1250, the electronic device according to an embodiment may display a visual object to select at least a portion of the screen to be displayed through a cover display in the screen on which the video is displayed. The electronic device may display the visual object in the screen displayed within the flexible display based on the operation 1210. The visual object may include the visual object 320 of FIG. 3. The visual object may include the visual objects 410, 420, and 430 described above with reference to FIG. 4.

Referring to FIG. 12, in an operation 1260, the electronic device according to an embodiment may determine whether an input indicating to select at least a portion of the screen to be displayed through the cover display is received. In a state in which the visual object is displayed based on the operation 1250, the electronic device may receive the input indicating to select at least a portion of the screen to be displayed through the cover display based on the visual object. The input indicating to select at least a portion of the screen to be displayed through the cover display may include a gesture (e.g., the double-tap gesture performed on the cover display 154, described above with reference to FIG. 4) performed on the cover display, independent of the visual object of the operation 1250. For example, in a state in which the video is not included in the screen (1240-No), the electronic device may receive the input of the operation 1260 based on the gesture performed on the cover display, even though the visual object of the operation 1250 is not displayed within the flexible display.

In a state of identifying the input of the operation 1260 (1260-Yes), in an operation 1270, the electronic device according to an embodiment may display at least a portion of the screen displayed within the flexible display, selected by the input of the operation 1260, within the cover display. The electronic device may perform the operation 1270 similar to the operation 1140 of FIG. 11. For example, based on the operation 1140 of FIG. 11 and the operation 1270 of FIG. 12, the electronic device may execute mirroring based on the flexible display and the cover display included in the electronic device.

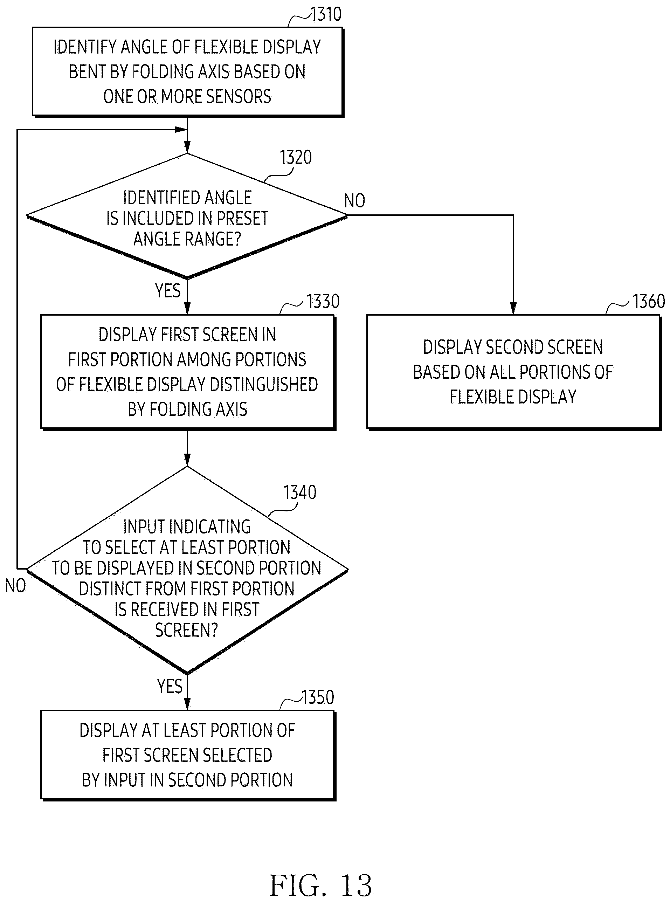

FIG. 13 illustrates an exemplary flowchart for describing an operation of an electronic device according to an embodiment. The electronic device of FIG. 13 may include the electronic device 101 of FIG. 1 and/or FIG. 10. An operation of the electronic device based on the flowchart of FIG. 13 may be performed by, for example, the electronic device 101 and/or the processor 120 of FIG. 1.

Referring to FIG. 13, in an operation 1310, the electronic device according to an embodiment may identify an angle of a flexible display bent by a folding axis (e.g., the folding axis F of FIG. 10) based on one or more sensors. The electronic device may perform the operation 1310 of FIG. 13, similar to the operation 1220 of FIG. 12. In an operation 13020, the electronic device may determine whether the angle of the operation 1310 is included in a preset angle range. The preset angle range may be associated with a state in which distinct portions of the flexible display distinguished by the folding axis are positioned toward distinct directions. The preset angle range may be associated with another state different from a state in which directions of the portions are parallel.

Based on the operation 1320, in a state of identifying the angle included in the preset angle range (1320-Yes), in an operation 1330, the electronic device according to an embodiment may display a first screen in a first portion among the portions of the flexible display distinguished by the folding axis. Since the electronic device selectively displays the first screen in the first portion based on the operation 1330, a second portion distinct from the first portion may be deactivated. Each of the first portion and the second portion may include the first portion 1010 and the second portion 1020 of FIG. 10.

While displaying the first screen in the first portion of the portions based on the operation 1330, in an operation 1340, the electronic device according to an embodiment may determine whether an input indicating to select at least a portion to be displayed in the second portion distinct from the first portion is received in the first screen. The input may include an input indicating to select the visual object 320-1 of FIG. 10. Based on identifying multimedia content (e.g., the video 310 of FIG. 3 to FIG. 10) within the first screen in the state of performing the operation 1330, the electronic device may display a visual object (e.g., the visual object 320-1 of FIG. 10) for copying at least a portion of the first screen displayed through the first portion to the second portion.

Prior to receiving the input of the operation 1340 (1340-No), the electronic device may maintain monitoring the angle of the flexible display based on the operation 1320. In a state of receiving the input of the operation 1340 (1340-Yes), in an operation 1350, the electronic device according to an embodiment may display at least a portion of the first screen selected by the input of the operation 1340 in the second portion. A state in which the electronic device performs the operation 1350 may include a state in which all of the first portion 1010 and the second portion 1020 of FIG. 10 are activated. Based on the operation 1350, the electronic device may execute mirroring based on the first portion and the second portion of the flexible display.

Referring to FIG. 13, in a state in which the angle distinct from the preset angle range is identified based on the operation 1320 (1320-No), in an operation 1360, the electronic device according to an embodiment may display a second screen corresponding to the first screen of the operation 1330, based on all portions of the flexible display. For example, the second screen may be displayed by the electronic device based on execution of an application corresponding to the first screen. For example, similar to the state 201 of FIG. 2B, in case that the angle included in another angle range including a straight angle is identified, the electronic device may display the second screen based on all portions of the flexible display based on the operation 1360.

As described above, according to an embodiment, the electronic device may include a deformable flexible display. Based on the flexible display and/or another display (e.g., the cover display 154 of FIG. 1) positioned in another surface distinct from a surface of a housing of the electronic device on which the flexible display is positioned, the electronic device may execute a function associated with mirroring. For example, based on the mirroring, content (e.g., the video 310 of FIG. 3) in which all of the flexible display and the cover display included in the electronic device are matched may be displayed . For example, based on the mirroring, the matched content may be displayed on distinct portions of the flexible display included in the electronic device. Based on the mirroring, the electronic device may provide the matched content to distinct users browsing the electronic device in distinct directions.

With respect to the electronic device including a plurality of displays, a method for displaying at least a portion of a screen displayed on a first display among the plurality of displays through a second display among the plurality of displays may be required.

As described above, according to an embodiment, an electronic device (e.g., the electronic device 101 of FIG. 1 to FIG. 8, and/or FIG. 9A to FIG. 9C) may comprise a housing (e.g., the housing 220 of FIG. 2A to FIG. 2B) foldable based on a folding axis, a flexible display (e.g., the flexible display 152 of FIG. 1 to FIG. 10) positioned on a first surface of the housing, a cover display (e.g., the cover display 154 of FIG. 1 to FIG. 8 and/or FIG. 9A to FIG. 9C) positioned on a second surface opposite to the first surface of the housing, one or more sensors (e.g., the sensor 140 of FIG. 1), and a processor (e.g., the processor 120 of FIG. 1). The processor may be configured to identify, in a state (e.g., the state 202 of FIG. 2B) of displaying a screen within the flexible display, data of the one or more sensors. The processor may be configured to display, based on identifying a preset posture of the housing based on the identified data, a visual object (e.g., the visual object 320 of FIG. 3, and/or the visual objects 410, 420, and 430 of FIG. 4) to select at least a portion of the screen to be displayed through the cover display, in the screen. The processor may be configured to display, in response to an input identified based on the visual object and indicating to select at least a portion of the screen, the at least a portion of the screen selected by the input within the cover display. Since the electronic device displays the at least a portion of the screen in all of the flexible display and the cover display based on the preset posture, the electronic device may provide the at least a portion of the screen to users browsing each of the flexible display and the cover display.

For example, the processor may be configured to identify an angle of the flexible display bent by the folding axis using the data. For example, the processor may be configured to display, based on identifying the angle included in a preset angle range associated with the preset posture, the visual object.

For example, the one or more sensors may comprise at least one of one or more acceleration sensors to output the data to be used to identify the angle associated with the folding axis, or a Hall sensor.

For example, the processor may be configured to display, based on identifying that a direction of the cover display is directed to a direction different from a direction of an acceleration of gravity based on the data, the visual object.

For example, the processor may be configured to display, based on identifying the preset posture, a plurality of visual objects (e.g., the visual objects 411, 412, 413, and 414 of FIG. 4), including the visual object, corresponding to options to select distinct portions in the screen.

For example, the plurality of visual objects may be displayed based on whether a video (e.g., the video 310 of FIG. 3 to FIG. 8, and/or FIG. 9A to FIG. 9C) is included in the screen, and include a visual object (e.g., the visual object 411 of FIG. 4) to select a portion where the video in the screen is displayed.

For example, the plurality of visual objects may include a visual object (e.g., the visual object 412 of FIG. 4) to select at least a portion of the screen to be displayed through the cover display, based on areas identified from the screen corresponding to distinct applications executed by the processor.

For example, the processor may be configured to display, in response to an input indicating to select the visual object to select the at least a portion of the screen based on the areas, another visual object (e.g., the visual objects 620, 621, 622, 623, and 625 of FIG. 6) to select the areas.

For example, the processor may be configured to receive, based on the another visual object, another input indicating to select, among the areas, a first area to be displayed through the cover display, and a second area to be displayed in a portion distinguished by the folding axis within the flexible display.

For example, a camera (e.g., the camera 230 of FIG. 2A) positioned on the second surface may be further comprised. The processor may be configured to obtain, in a state displaying at least a portion of the screen within the cover display, at least one image (e.g., the image 710 of FIG. 7) from the camera. The processor may be configured to display, based on at least one of a position or a size of a subject that is included in the at least one image and is classified to a preset category, a visual object (e.g., the visual objects 720 and 730 of FIG. 7) to guide a movement of the subject, or a modification of a posture of the housing, through at least one of the cover display or the flexible display.

As described above, according to an embodiment, a method of an electronic device may comprise identifying, while displaying a first screen within a flexible display of the electronic device, data of one or more sensors in the electronic device. The method may comprise displaying, in a state of identifying an angle of the flexible display bent by a folding axis in a housing of the electronic device is included in a preset angle range, based on the identified data, a second screen corresponding to the first screen in a first portion of the portions of the flexible display distinguished by the folding axis and displaying a visual object to select at least a portion of the second screen to be displayed through a second portion distinct from the first portion among the portions on the second screen. The method may comprise displaying, in response to an input received based on the visual object and indicating to select at least a portion of the second screen, the at least a portion of the second screen selected by the input in the second portion.

For example, the identifying the data may comprise identifying the angle of the flexible display bent by the folding axis, based on the one or more sensors including a Hall sensor outputting the data associated with the angle of the folding axis.

For example, the displaying the visual object may comprise displaying, in the state, a plurality of visual objects, including the visual object, corresponding to options to select distinct portions in the second screen.

For example, the displaying of the plurality of visual objects may comprise displaying, based on whether a video is included in the second screen, a visual object to select a portion in the second screen displaying the video.

For example, the displaying of the plurality of visual objects may comprise displaying, based on identifying areas corresponding to distinct applications executed by a processor in the electronic device in the second screen, a visual object to select at least a portion of the second screen to be displayed through the second portion based on the areas.

As described above, according to an embodiment, a method of an electronic device may comprise identifying, in a state of displaying a screen within a flexible display positioned on a first surface of a housing of the electronic device, data of one or more sensors in the electronic device. The method may comprise displaying, based on identifying a preset posture of the housing based on the identified data, a visual object to select at least a portion of the screen to be displayed through the cover display in the screen. The method may comprise displaying, in response to an input identified based on the visual object and indicating to select at least a portion of the screen, the at least a portion of the screen selected by the input within the cover display.

For example, the displaying the visual object may comprise identifying an angle of the flexible display bent by a folding axis of the housing using the data. The displaying the visual object may comprise displaying, based on identifying the angle included in a preset angle range associated with the preset posture, the visual object.

For example, the identifying the data may comprise receiving, from the one or more sensors including at least one of an acceleration sensor or a Hall sensor, the data associated with the angle.

For example, the displaying the visual object may comprise displaying, based on identifying that a direction of the cover display is directed to a direction different from a direction of an acceleration of gravity based on the data, the visual object.

For example, the displaying the visual object may comprise displaying, based on identifying the preset posture, a plurality of visual objects, including the visual object, corresponding to options to select distinct portions in the screen.

For example, the displaying the plurality of visual objects may comprise displaying, based on whether a video is included in the screen, a visual object to select a portion where the video in the screen is displayed.

As described above, according to an embodiment, an electronic device (e.g., the electronic device 101 of FIG. 1 and/or FIG. 10) may comprise a housing foldable based on a folding axis, a flexible display (e.g., the flexible display 152 of FIG. 1 and/or FIG. 10) positioned on the housing, one or more sensors (e.g., the sensor 140 of FIG. 1), and a processor (e.g., the processor 120 of FIG. 1). The processor may be configured to identify, while displaying a first screen within the flexible display, data of the one or more sensors. The processor may be configured to display, in a state of identifying an angle of the flexible display bent by the folding axis is included in a preset angle range, based on the identified data, a second screen corresponding to the first screen in a first portion (e.g., the first portion 1010 of FIG. 10) of the flexible display distinguished by the folding axis and display a visual object (e.g., the visual object 320-1 of FIG. 10) to select at least a portion of the second screen to be displayed through a second portion (e.g., the second portion 1020 of FIG. 10) distinct from the first portion among the portions on the second screen. The processor may be configured to display, in response to an input received based on the visual object and indicating to select at least a portion of the second screen, the at least a portion of the second screen selected by the input in the second portion.

For example, the processor may be configured to identify the angle of the flexible display bent by the folding axis, based on the one or more sensors including a Hall sensor outputting the data associated with the angle of the folding axis.

For example, the processor may be configured to display, in the state, a plurality of visual objects, including the visual object, corresponding to options to select distinct portions in the second screen.

For example, the plurality of visual objects may be displayed based on whether a video is included in the second screen, and include a visual object to select a portion in the second screen displaying the video.

For example, the plurality of visual objects may include, based on identifying areas corresponding to distinct applications executed by the processor in the second screen, a visual object to select at least a portion of the second screen to be displayed through the second portion based on the areas.

As described above, according to an embodiment, an electronic device may comprise a foldable housing including a first housing part and a second housing part foldable based on a folding axis with respect to the first housing part, a flexible display positioned on a first surface of the first housing part and a second surface of the second housing part, a cover display positioned on a third surface of the first housing part opposite to the first surface, one or more sensors, and a processor. The processor may be configured to display, in an unfolded state of the electronic device that is distinguished by an angle between the first surface and the second surface and is based on data detected from the one or more sensors, a screen on the flexible display. The processor may be configured to display, in a sub-folded state of the electronic device switched from the unfolded state based on the data, a visual object to select at least a portion of the screen to be displayed through the cover display, in the screen. The processor may be configured to receive an input to select at least a portion of the screen based on the visual object. The processor may be configured to display, based on the received input in the sub-folded state, the at least a portion of the screen corresponding to the input on the cover display, together with the screen displayed on the flexible display.

For example, the processor may be configured to identify an angle of the flexible display bent by the folding axis using the data. The processor may be configured to display, based on identifying the angle included in a preset angle range associated with the sub-folded state, the visual object.

For example, the one or more sensors may comprise at least one of one or more acceleration sensors to output the data to be used to identify the angle between the first surface and the second surface which are foldable at the folding axis, or a Hall sensor.

For example, the processor may be configured to display, based on identifying that the third surface on which the cover display is positioned is directed to a direction different from a direction of an acceleration of gravity based on the data, the visual object.

For example, the processor may be configured to display, in the sub-folded state, a plurality of visual objects, including the visual object, corresponding to options to select distinct portions in the screen.

For example, the plurality of visual objects may be displayed based on whether a video is included in the screen, and include a visual object to select a portion where the video in the screen is displayed.

For example, the plurality of visual objects may include a visual object to select at least a portion of the screen to be displayed through the cover display, based on areas identified from the screen corresponding to distinct applications executed by the processor.

For example, the processor may be configured to display, in response to an input indicating to select the visual object to select the at least a portion of the screen based on the areas, another visual object to select the areas.

For example, the processor may be configured to receive, based on the another visual object, another input indicating to select, among the areas, a first area to be displayed through the cover display, and a second area to be displayed in a portion distinguished by the folding axis within the flexible display.

For example, the electronic device may comprise a camera positioned on the second surface. The processor may be configured to obtain, in a state of displaying at least a portion of the screen within the cover display, at least one image from the camera. The processor may be configured to display, based on at least one of a position or a size of a subject that is included in the at least one image and is classified to a preset category, a visual object to guide a movement of the subject, or a modification of a posture of the housing, through at least one of the cover display or the flexible display.

As described above, according to an embodiment, a method of an electronic device may comprise displaying, in an unfolded state of the electronic device that is distinguished by an angle between a first surface of a first housing part and a second surface of a second housing part of the electronic device, a screen on the flexible display, a flexible display being positioned on the first surface and the second surface, the angle being based on data detected from one or more sensors of the electronic device. The second housing part may be foldably coupled to the first housing part. The method may comprise displaying, in a sub-folded state of the electronic device switched from the unfolded state based on the data, a visual object to select at least a portion of the screen to be displayed through a cover display, in the screen, the cover display is positioned on a third surface of the first housing part opposite to the first surface. The method may comprise receiving an input to select at least a portion of the screen based on the visual object. The method may comprise displaying, based on the received input in the sub-folded state, the at least a portion of the screen corresponding to the input on the cover display, together with the screen displayed on the flexible display.

For example, the identifying the data may comprise identifying the angle of the flexible display bent by the folding axis, based on the one or more sensors including a Hall sensor outputting the data associated with the angle of the folding axis.

For example, the displaying the visual object may comprise displaying, in the state, a plurality of visual objects, including the visual object, corresponding to options to select distinct portions in the second screen.

For example, the displaying the plurality of visual objects may comprise displaying, based on whether a video is included in the second screen, a visual object to select a portion in the second screen displaying the video.

For example, the displaying the plurality of visual objects may comprise displaying, based on identifying areas corresponding to distinct applications executed by a processor in the electronic device in the second screen, a visual object to select at least a portion of the second screen to be displayed through the second portion based on the areas.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

## Claims

1. An electronic device (101), comprising:
a foldable housing (220) including a first housing part (221) and a second housing part (222) foldable based on a folding axis (F) with respect to the first housing part;
a flexible display (152) positioned on a first surface (221-1) of the first housing part (221) and a first surface (222-1) of the second housing part (222);
a cover display (154) positioned on a second surface (222-2) of the second housing part (222), the second surface (222-2) opposite to the first surface (222-1) of the second housing part (222);
one or more sensors (140) configured to output data to be used to identify an angle (A) between the first surface (221-1) of the first housing part (221) and the first surface (222-1) of the second housing part (222); and
a processor (120);
wherein the electronic device (101) has an unfolded state and a sub-folded state, the states being distinguished by the angle (A) based on the data from the one or more sensors (140);
and wherein the processor (101) is configured to:
display, in the unfolded state of the electronic device (101), a screen (310, 340) on the flexible display (152) wherein a portion of the screen (310, 340) is used to reproduce a video (310);
display, in the sub-folded state of the electronic device (101) switched from the unfolded state based on the data, a plurality of visual objects (411, 412, 413, 414) to select at least a portion of the screen (310, 340) to be displayed through the cover display (154), in the screen (310, 340);
receive an input to select one of the plurality of visual objects (411, 412, 413, 414); and
based on the input to select a first visual object (411) received in the sub-folded state, maintain the display of the screen (310, 340) on the flexible display (152) and display, among the portion and a remaining portion of the screen (310, 340), the portion that is used to reproduce the video (310) via the cover display (154).

2. The electronic device of claim 1, wherein the processor is configured to:
use the data to identify an angle of the flexible display bent by the folding axis; and
on identifying that the angle is included in a preset angle range associated with the sub-folded state, display the plurality of visual objects.

3. The electronic device of claim 2, wherein the one or more sensors comprise:
at least one of:
one or more acceleration sensors for outputting data relating to a physical movement which can be used to identify the angle between the first surface of the first housing part and the first surface of the second housing part; and
a Hall sensor comprising a magnetic field sensor configured to measure a change in a magnetic field of a magnet.

4. The electronic device of claim 2, wherein the processor is configured to:
display, based on identifying that the second surface on which the cover display is positioned is directed in a direction different from a direction of an acceleration of gravity based on the data, the visual object.

5. The electronic device of claim 1, wherein the first visual object (411) is displayed based on whether the video (310) is included in the screen.

6. The electronic device of claim 1, wherein the plurality of visual objects includes:
a second visual object (414) to display the screen via the cover display (154) while the screen is maintained in the flexible display; and
a third visual object (412) to select at least a portion of the screen to be displayed through the cover display, based on areas (910, 920) identified from the screen corresponding to distinct processes executed by the processor.

7. The electronic device of claim 6, wherein the processor is configured to:
display, in response to an input indicating to select the visual object to select the at least a portion of the screen based on the areas, another visual object (620) to select the areas.

8. The electronic device of claim 7, wherein the processor is configured to:
receive, based on the another visual object, another input indicating to select, among the areas, a first area to be displayed through the cover display, and a second area to be displayed in a portion distinguished by the folding axis within the flexible display.

9. The electronic device of claim 1, further comprising a camera (230) positioned on the second surface,
wherein the processor is configured to:
obtain, in a state displaying at least a portion of the screen within the cover display, at least one image (710) from the camera; and
display, based on at least one of a position or a size of a subject (715) that is included in the at least one image and is classified to a preset category, a visual object (720, 730) guiding a movement of the subject, or a modification of a posture of the housing, through at least one of the cover display or the flexible display.

10. A method of an electronic device comprising:
a foldable housing (220) including a first housing part (221) and a second housing part (222) foldable based on a folding axis (F) with respect to the first housing part;
a flexible display (152) positioned on a first surface (221-1) of the first housing part and a first surface (222-1) of the second housing part;
a cover display (154) positioned on a second surface (222-2) of the second housing part, the second surface opposite to the first surface of the second housing part; and
one or more sensors (140) configured to output data to be used to identify an angle (A) between the first surface of the first housing part and the first surface of the second housing part;
the method comprising:
arranging the electronic device so that it has an unfolded state and a sub-folded state, the states being distinguished by the angle (A) based on the data from the one or more sensors;
displaying, in the unfolded state of the electronic device, a screen (310, 340) on the flexible display wherein a portion of the screen is used to reproduce a video;
displaying, in the sub-folded state of the electronic device switched from the unfolded state based on the data, a plurality of visual objects (411, 412, 413, 414) to select at least a portion of the screen to be displayed through the cover display (154), in the screen; and
receiving an input to select one of the plurality of visual objects; and
based on the input to select a first visual object (411) received in the sub-folded state, maintain the display of the screen (310, 340) on the flexible display (152) and display, among the portion and a remaining portion of the screen (310, 340), the portion that is used to reproduce the video (310) via the cover display (154).

11. The method of claim 10, wherein the one or more sensors include a Hall sensor, and the method comprises:
identifying the angle of the flexible display bent by the folding axis based on the Hall sensor outputting data associated with the angle of the folding axis.

12. The method of claim 11, wherein displaying the plurality of visual objects comprises:
displaying, based on whether a video (310) is included in the screen, a visual object (411) to select a portion where the video in the screen is displayed.

13. The method of claim 11, wherein displaying the plurality of visual objects comprises:
based on identifying areas (910, 920) corresponding to distinct processes executed by a processor (120) in the electronic device, displaying a visual object (412) in the screen to select at least a portion of the screen to be displayed through the cover display.

## Patentansprüche

1. Elektronische Vorrichtung (101), umfassend:
ein klappbares Gehäuse (220), das einen ersten Gehäuseteil (221) und einen zweiten Gehäuseteil (222), der basierend auf einer Klappachse (F) in Bezug auf den ersten Gehäuseteil klappbar ist, enthält;
eine flexible Anzeige (152), die auf einer ersten Oberfläche (221-1) des ersten Gehäuseteils (221) und einer ersten Oberfläche (222-1) des zweiten Gehäuseteils (222) positioniert ist;
eine Abdeckungsanzeige (154), die auf einer zweiten Oberfläche (222-2) des zweiten Gehäuseteils (222) positioniert ist, wobei sich die zweite Oberfläche (222-2) gegenüber der ersten Oberfläche (222-1) des zweiten Gehäuseteils (222) befindet;
einen oder mehrere Sensoren (140), die dazu konfiguriert sind, Daten auszugeben, die zum Identifizieren eines Winkels (A) zwischen der ersten Oberfläche (221-1) des ersten Gehäuseteils (221) und der ersten Oberfläche (222-1) des zweiten Gehäuseteils (222) zu verwenden sind; und einen Prozessor (120);
wobei die elektronische Vorrichtung (101) einen aufgeklappten Zustand und einen teilgeklappten Zustand aufweist, wobei die Zustände durch den Winkel (A) basierend auf den Daten von dem einen oder den mehreren Sensoren (140) unterschieden werden;
und wobei der Prozessor (101) zu Folgendem konfiguriert ist:
Anzeigen, in dem aufgeklappten Zustand der elektronischen Vorrichtung (101), eines Bildschirms (310, 340) auf der flexiblen Anzeige (152), wobei ein Abschnitt des Bildschirms (310, 340) verwendet wird, um ein Video (310) wiederzugeben;
Anzeigen einer Vielzahl von visuellen Objekten (411, 412, 413, 414) in dem teilgeklappten Zustand der elektronischen Vorrichtung (101), die basierend auf den Daten aus dem aufgeklappten Zustand gewechselt hat, um mindestens einen Abschnitt des Bildschirms (310, 340) auszuwählen, der über die Abdeckungsanzeige (154) anzuzeigen ist, auf dem Bildschirm (310, 340);
Empfangen einer Eingabe zum Auswählen eines der Vielzahl von visuellen Objekten (411, 412, 413, 414); und
basierend auf der Eingabe zum Auswählen eines ersten visuellen Objekts (411), die in dem teilgeklappten Zustand empfangen wird, Aufrechterhalten der Anzeige des Bildschirms (310, 340) auf der flexiblen Anzeige (152) und Anzeigen, aus dem Abschnitt und einem verbleibenden Abschnitt des Bildschirms (310, 340), des Abschnitts, der verwendet wird, um das Video (310) über die Abdeckungsanzeige (154) wiederzugeben.

2. Elektronische Vorrichtung nach Anspruch 1, wobei der Prozessor zu Folgendem konfiguriert ist:
Verwenden der Daten, um einen Winkel der flexiblen Anzeige zu identifizieren, die an der Klappachse gebogen ist; und
beim Identifizieren, dass der Winkel in einem voreingestellten Winkelbereich enthalten ist, der dem teilgeklappten Zustand zugeordnet ist, Anzeigen der Vielzahl von visuellen Objekten.

3. Elektronische Vorrichtung nach Anspruch 2, wobei der eine oder die mehreren Sensoren Folgendes umfassen:
mindestens eines von Folgenden:
einen oder mehrere Beschleunigungssensoren zum Ausgeben von Daten in Bezug auf eine physische Bewegung, die zum Identifizieren des Winkels zwischen der ersten Oberfläche des ersten Gehäuseteils und der ersten Oberfläche des zweiten Gehäuseteils verwendet werden können; und
einen Hall-Sensor, der einen Magnetfeldsensor umfasst, der dazu konfiguriert ist, eine Änderung eines Magnetfelds eines Magneten zu messen.

4. Elektronische Vorrichtung nach Anspruch 2, wobei der Prozessor zu Folgendem konfiguriert ist:
Anzeigen des visuellen Objekts basierend auf dem Identifizieren, dass die zweite Oberfläche, auf der die Abdeckungsanzeige positioniert ist, basierend auf den Daten in eine Richtung gerichtet ist, die sich von einer Richtung einer Erdbeschleunigung unterscheidet.

5. Elektronische Vorrichtung nach Anspruch 1, wobei das erste visuelle Objekt (411) basierend darauf angezeigt wird, ob das Video (310) in dem Bildschirm enthalten ist.

6. Elektronische Vorrichtung nach Anspruch 1, wobei die Vielzahl von visuellen Objekten Folgendes enthält:
ein zweites visuelles Objekt (414) zum Anzeigen des Bildschirms über die Abdeckungsanzeige (154), während der Bildschirm in der flexiblen Anzeige aufrechterhalten wird; und
ein drittes visuelles Objekt (412) zum Auswählen mindestens eines Abschnitts des Bildschirms, der über die Abdeckungsanzeige anzuzeigen ist, basierend auf Bereichen (910, 920), die aus dem Bildschirm als unterschiedlichen Prozessen entsprechend, die durch den Prozessor ausgeführt werden, identifiziert sind.

7. Elektronische Vorrichtung nach Anspruch 6, wobei der Prozessor zu Folgendem konfiguriert ist:
Anzeigen, als Reaktion auf eine Eingabe, die angibt, das visuelle Objekt auszuwählen, um den mindestens einen Abschnitt des Bildschirms basierend auf den Bereichen auszuwählen, eines anderen visuellen Objekts (620), um die Bereiche auszuwählen.

8. Elektronische Vorrichtung nach Anspruch 7, wobei der Prozessor zu Folgendem konfiguriert ist:
Empfangen, basierend auf dem anderen visuellen Objekt, einer anderen Eingabe, die angibt, aus den Bereichen einen ersten Bereich, der über die Abdeckungsanzeige anzuzeigen ist, und einen zweiten Bereich auszuwählen, der in einem Abschnitt anzuzeigen ist, der durch die Klappachse innerhalb der flexiblen Anzeige unterschieden wird.

9. Elektronische Vorrichtung nach Anspruch 1, ferner umfassend eine Kamera (230), die auf der zweiten Oberfläche positioniert ist,
wobei der Prozessor zu Folgendem konfiguriert ist:
in einem Zustand, der mindestens einen Abschnitt des Bildschirms innerhalb der Abdeckungsanzeige anzeigt, Erlangen mindestens eines Bilds (710) von der Kamera; und
Anzeigen, basierend auf mindestens einem von einer Position oder einer Größe eines Subjekts (715), das in dem mindestens einen Bild enthalten ist und in eine voreingestellte Kategorie klassifiziert ist, eines visuellen Objekts (720, 730), das eine Bewegung des Subjekts oder eine Änderung einer Stellung des Gehäuses führt, über mindestens eine von der Abdeckungsanzeige oder der flexiblen Anzeige.

10. Verfahren einer elektronischen Vorrichtung, umfassend:
ein klappbares Gehäuse (220), das einen ersten Gehäuseteil (221) und einen zweiten Gehäuseteil (222), der basierend auf einer Klappachse (F) in Bezug auf den ersten Gehäuseteil klappbar ist, enthält;
eine flexible Anzeige (152), die auf einer ersten Oberfläche (221-1) des ersten Gehäuseteils und einer ersten Oberfläche (222-1) des zweiten Gehäuseteils positioniert ist;
eine Abdeckungsanzeige (154), die auf einer zweiten Oberfläche (222-2) des zweiten Gehäuseteils positioniert ist, wobei sich die zweite Oberfläche gegenüber der ersten Oberfläche des zweiten Gehäuseteils befindet; und
einen oder mehrere Sensoren (140), die dazu konfiguriert sind, Daten auszugeben, die zum Identifizieren eines Winkels (A) zwischen der ersten Oberfläche des ersten Gehäuseteils und der ersten Oberfläche des zweiten Gehäuseteils zu verwenden sind;
wobei das Verfahren Folgendes umfasst:
Anordnen der elektronischen Vorrichtung, sodass sie einen aufgeklappten Zustand und einen teilgeklappten Zustand aufweist, wobei die Zustände durch den Winkel (A) basierend auf den Daten von dem einen oder den mehreren Sensoren unterschieden werden;
Anzeigen, in dem aufgeklappten Zustand der elektronischen Vorrichtung, eines Bildschirms (310, 340) auf der flexiblen Anzeige, wobei ein Abschnitt des Bildschirms verwendet wird, um ein Video wiederzugeben;
Anzeigen einer Vielzahl von visuellen Objekten (411, 412, 413, 414) in dem teilgeklappten Zustand der elektronischen Vorrichtung, die basierend auf den Daten aus dem aufgeklappten Zustand gewechselt hat, um mindestens einen Abschnitt des Bildschirms auszuwählen, der über die Abdeckungsanzeige (154) anzuzeigen ist, auf dem Bildschirm; und
Empfangen einer Eingabe zum Auswählen eines der Vielzahl von visuellen Objekten; und
basierend auf der Eingabe zum Auswählen eines ersten visuellen Objekts (411), die in dem teilgeklappten Zustand empfangen wird, Aufrechterhalten der Anzeige des Bildschirms (310, 340) auf der flexiblen Anzeige (152) und Anzeigen, aus dem Abschnitt und einem verbleibenden Abschnitt des Bildschirms (310, 340), des Abschnitts, der verwendet wird, um das Video (310) über die Abdeckungsanzeige (154) wiederzugeben.

11. Verfahren nach Anspruch 10, wobei der eine oder die mehreren Sensoren einen Hall-Sensor enthalten und das Verfahren Folgendes umfasst:
Identifizieren des Winkels der flexiblen Anzeige, die an der Klappachse gebogen ist, basierend darauf, dass der Hall-Sensor Daten ausgibt, die dem Winkel der Klappachse zugeordnet sind.

12. Verfahren nach Anspruch 11, wobei das Anzeigen der Vielzahl von visuellen Objekten Folgendes umfasst:
Anzeigen, basierend darauf, ob ein Video (310) in dem Bildschirm enthalten ist, eines visuellen Objekts (411), um einen Abschnitt auszuwählen, in dem das Video auf dem Bildschirm angezeigt wird.

13. Verfahren nach Anspruch 11, wobei das Anzeigen der Vielzahl von visuellen Objekten Folgendes umfasst:
basierend auf einem Identifizieren von Bereichen (910, 920), die unterschiedlichen Prozessen entsprechen, die durch einen Prozessor (120) in der elektronischen Vorrichtung ausgeführt werden, Anzeigen eines visuellen Objekts (412) auf dem Bildschirm, um mindestens einen Abschnitt des Bildschirms auszuwählen, der über die Abdeckungsanzeige anzuzeigen ist.

## Revendications

1. Dispositif électronique (101), comprenant :
un boîtier pliable (220) comprenant une première pièce de boîtier (221) et une seconde pièce de boîtier (222) pliable sur la base d'un axe de pliage (F) par rapport à la première pièce de boîtier ;
un dispositif d'affichage souple (152) positionné sur une première surface (221-1) de la première pièce de boîtier (221) et une première surface (222-1) de la seconde pièce de boîtier (222) ;
un dispositif d'affichage de couvercle (154) positionné sur une seconde surface (222-2) de la seconde pièce de boîtier (222), la seconde surface (222-2) étant opposée à la première surface (222-1) de la seconde pièce de boîtier (222) ;
un ou plusieurs capteurs (140) configurés pour émettre en sortie des données devant être utilisées pour identifier un angle (A) entre la première surface (221-1) de la première pièce de boîtier (221) et la première surface (222-1) de la seconde pièce de boîtier (222) ; et
un processeur (120) ;
dans lequel le dispositif électronique (101) présente un état déplié et un état sous-plié, les états étant distingués par l'angle (A) sur la base des données à partir des un ou plusieurs capteurs (140) ;
et dans lequel le processeur (101) est configuré pour :
afficher, à l'état déplié du dispositif électronique (101), un écran (310, 340) sur le dispositif d'affichage souple (152) dans lequel une partie de l'écran (310, 340) est utilisée pour reproduire une vidéo (310) ;
afficher, à l'état sous-plié du dispositif électronique (101) commuté à partir de l'état déplié sur la base des données, une pluralité d'objets visuels (411, 412, 413, 414) pour sélectionner au moins une partie de l'écran (310, 340) devant être affichée à travers le dispositif d'affichage de couvercle (154), dans l'écran (310, 340) ;
recevoir une entrée pour sélectionner l'un de la pluralité d'objets visuels (411, 412, 413, 414) ; et
sur la base de l'entrée pour sélectionner un premier objet visuel (411) reçue à l'état sous-plié, maintenir l'affichage de l'écran (310, 340) sur le dispositif d'affichage souple (152) et afficher, parmi la partie et une partie restante de l'écran (310, 340), la partie qui est utilisée pour reproduire la vidéo (310) par l'intermédiaire du dispositif d'affichage de couvercle (154).

2. Dispositif électronique de la revendication 1, dans lequel le processeur est configuré pour :
utiliser les données pour identifier un angle du dispositif d'affichage souple courbé par l'axe de pliage ; et
lors de l'identification du fait que l'angle est compris dans une plage d'angle prédéfinie associée à l'état sous-plié, afficher la pluralité d'objets visuels.

3. Dispositif électronique de la revendication 2, dans lequel les un ou plusieurs capteurs comprennent :
au moins l'un parmi :
un ou plusieurs capteurs d'accélération destinés à émettre en sortie des données relatives à un mouvement physique qui peuvent être utilisées pour identifier l'angle entre la première surface de la première pièce de boîtier et la première surface de la seconde pièce de boîtier ; et
un capteur à effet Hall comprenant un capteur de champ magnétique configuré pour mesurer un changement dans un champ magnétique d'un aimant.

4. Dispositif électronique de la revendication 2, dans lequel le processeur est configuré pour :
afficher, sur la base de l'identification du fait que la seconde surface sur laquelle l'affichage de couverture est positionné est dirigée dans une direction différente d'une direction d'une accélération de gravité sur la base des données, l'objet visuel.

5. Dispositif électronique de la revendication 1, dans lequel le premier objet visuel (411) est affiché sur la base du fait que la vidéo (310) est comprise ou non dans l'écran.

6. Dispositif électronique de la revendication 1, dans lequel la pluralité d'objets visuels comprend :
un deuxième objet visuel (414) pour afficher l'écran par l'intermédiaire du dispositif d'affichage de couvercle (154) pendant que l'écran est maintenu dans l'affichage souple ; et
un troisième objet visuel (412) pour sélectionner au moins une partie de l'écran devant être affichée à travers l'affichage de couvercle, sur la base de zones (910, 920) identifiées à partir de l'écran correspondant à des processus distincts exécutés par le processeur.

7. Dispositif électronique de la revendication 6, dans lequel le processeur est configuré pour :
afficher, en réponse à une entrée indiquant de sélectionner l'objet visuel pour sélectionner au moins une partie de l'écran sur la base des zones, un autre objet visuel (620) pour sélectionner les zones.

8. Dispositif électronique de la revendication 7, dans lequel le processeur est configuré pour :
recevoir, sur la base de l'autre objet visuel, une autre entrée indiquant de sélectionner, parmi les zones, une première zone devant être affichée à travers le dispositif d'affichage de couvercle, et une seconde zone devant être affichée dans une partie distinguée par l'axe de pliage à l'intérieur du dispositif d'affichage souple.

9. Dispositif électronique de la revendication 1, comprenant en outre une caméra (230) positionnée sur la seconde surface,
dans lequel le processeur est configuré pour :
obtenir, dans un état affichant au moins une partie de l'écran à l'intérieur du dispositif d'affichage de couvercle, au moins une image (710) à partir de la caméra ; et
afficher, sur la base d'une position et/ou d'une taille d'un sujet (715) qui est compris dans l'au moins une image et est classé dans une catégorie prédéfinie, un objet visuel (720, 730) guidant un mouvement du sujet, ou une modification d'une posture du boîtier, à travers au moins l'un du dispositif d'affichage de couvercle ou de l'affichage souple.

10. Procédé d'un dispositif électronique, comprenant :
un boîtier pliable (220) comprenant une première pièce de boîtier (221) et une seconde pièce de boîtier (222) pliable sur la base d'un axe de pliage (F) par rapport à la première pièce de boîtier ;
un dispositif d'affichage souple (152) positionné sur une première surface (221-1) de la première pièce de boîtier et une première surface (222-1) de la seconde pièce de boîtier ;
un dispositif d'affichage de couvercle (154) positionné sur une seconde surface (222-2) de la seconde pièce de boîtier, la seconde surface étant opposée à la première surface de la seconde pièce de boîtier ; et
un ou plusieurs capteurs (140) configurés pour émettre en sortie des données devant être utilisées pour identifier un angle (A) entre la première surface de la première pièce de boîtier et la première surface de la seconde pièce de boîtier ;
le procédé comprenant :
l'agencement du dispositif électronique afin qu'il présente un état déplié et un état sous-plié, les états étant distingués par l'angle (A) sur la base des données à partir des un ou plusieurs capteurs ;
l'affichage, à l'état déplié du dispositif électronique, d'un écran (310, 340) sur le dispositif d'affichage souple dans lequel une partie de l'écran est utilisée pour reproduire une vidéo ;
l'affichage, à l'état sous-plié du dispositif électronique commuté à partir de l'état déplié sur la base des données, d'une pluralité d'objets visuels (411, 412, 413, 414) pour sélectionner au moins une partie de l'écran devant être affichée à travers le dispositif d'affichage de couvercle (154), dans l'écran ; et
la réception d'une entrée pour sélectionner l'un de la pluralité d'objets visuels ; et
sur la base de l'entrée pour sélectionner un premier objet visuel (411) reçue à l'état sous-plié, le maintien de l'affichage de l'écran (310, 340) sur le dispositif d'affichage souple (152) et l'affichage, parmi la partie et une partie restante de l'écran (310, 340), de la partie qui est utilisée pour reproduire la vidéo (310) par l'intermédiaire du dispositif d'affichage de couvercle (154).

11. Procédé de la revendication 10, dans lequel les un ou plusieurs capteurs comprennent un capteur à effet Hall, et le procédé comprend :
l'identification de l'angle du dispositif d'affichage souple courbé par l'axe de pliage sur la base de données émises en sortie par le capteur à effet Hall associées à l'angle de l'axe de pliage.

12. Procédé de la revendication 11, dans lequel l'affichage de la pluralité d'objets visuels comprend :
l'affichage, sur la base du fait qu'une vidéo (310) est comprise ou non dans l'écran, d'un objet visuel (411) pour sélectionner une partie où la vidéo dans l'écran est affichée.

13. Procédé de la revendication 11, dans lequel l'affichage de la pluralité d'objets visuels comprend :
sur la base de l'identification de zones (910, 920) correspondant à des processus distincts exécutés par un processeur (120) dans le dispositif électronique, l'affichage d'un objet visuel (412) dans l'écran pour sélectionner au moins une partie de l'écran devant être affichée à travers l'affichage de couvercle.
